(19) 

Europäisches
Patentamt
European
Patent Office
Office européen
des brevets

(11) **EP 4 572 174 A1**

(12) **EUROPEAN PATENT APPLICATION**
published in accordance with Art. 153(4) EPC

(43) Date of publication:
**18.06.2025 Bulletin 2025/25**

(21) Application number: **23864683.0**

(22) Date of filing: **12.09.2023**

(51) International Patent Classification (IPC):
***H04B 7/06*** (2006.01)

(52) Cooperative Patent Classification (CPC):
**H04B 7/06**

(86) International application number:
**PCT/CN2023/118184**

(87) International publication number:
**WO 2024/055951 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.09.2022 CN 202211116678**

(71) Applicant: **Huawei Technologies Co., Ltd.
Shenzhen, Guangdong 518129 (CN)**

(72) Inventors:
• **HU, Mengshi**
**Shenzhen, Guangdong 518129 (CN)**
• **HAN, Xiao**
**Shenzhen, Guangdong 518129 (CN)**
• **DU, Rui**
**Shenzhen, Guangdong 518129 (CN)**
• **NAREN, Gerile**
**Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **COMMUNICATION METHOD AND APPARATUS**

(57) Embodiments of this application are applied to a wireless local area network system that supports 802.11 series protocols, for example, a next-generation Wi-Fi protocol of IEEE 802.11ax, such as 802.11be, Wi-Fi 7, or EHT, or a next-generation protocol of 802.11be like Wi-Fi 8, and may be further applied to a UWB-based wireless personal area network system and a sensing system. Embodiments of this application provide a communication method and an apparatus. According to the method, a first device sends first information to a second device, so that the second device may determine, based on the first information, a sensing measurement result feedback requirement corresponding to a target measurement configuration, and the second device can trigger, based on the sensing measurement result feedback requirement, the first device to feed back a sensing measurement result. This helps improve feedback efficiency.

FIG. 6

## Description

This application claims priority to Chinese Patent Application No. 202211116678.7, filed with the China National Intellectual Property Administration on September 14, 2022 and entitled "COMMUNICATION METHOD AND APPARATUS", which is incorporated herein by reference in its entirety.

## TECHNICAL FIELD

Embodiments of this application relate to the communication field, and more specifically, to a communication method and an apparatus.

## BACKGROUND

In daily life, a signal sent by a wireless fidelity (wireless fidelity, Wi-Fi) device is usually received after the signal is reflected, diffracted, and scattered by various obstacles. Due to this phenomenon, the actually received signal is usually obtained by superimposing a plurality of signals, that is, a channel environment may become complex. However, from another perspective, this also facilitates sensing, via a wireless signal, of a physical environment that the wireless signal passes through. A surrounding environment can be inferred and sensed by analyzing a wireless signal, for example, channel state information (channel state information, CSI), affected by various obstacles. In this case, a wireless local area network (wireless local area network, WLAN) sensing technology is derived. Due to wide deployment of Wi-Fi devices and an increase in sensing requirements, sensing performed by widely available Wi-Fi devices is a hot topic of current research.

Currently, a trigger-based feedback procedure and a non-trigger-based feedback procedure are supported in the WLAN sensing technology. In the trigger-based feedback procedure, two feedback modes: an immediate feedback mode and a delayed feedback mode are supported. However, efficiency of feedback based on the two feedback modes is not high.

## SUMMARY

Embodiments of this application provide a communication method and an apparatus, to improve sensing feedback efficiency.

According to a first aspect, a communication method is provided. The method may be performed by a communication device, or may be performed by a component (for example, a chip or a circuit) of a communication device. This is not limited. For ease of description, descriptions are provided below by using an example in which the method is performed by a first device.

The method includes: A first device sends first information to a second device, where the first information is used to determine a sensing measurement result feedback requirement corresponding to a target measurement configuration, the first information indicates a sensing measurement result feedback requirement corresponding to each of N different measurement configurations, and N is a positive integer; the sensing measurement result feedback requirement includes at least one of the following: required duration from a moment at which the first device finishes receiving a first physical layer protocol data unit (physical protocol data unit, PPDU) to a moment at which the first device starts to send a second PPDU, or a feedback mode used by the first device to send the second PPDU; and the first PPDU is used by the first device to perform sensing measurement to obtain a sensing measurement result, the second PPDU includes the sensing measurement result, and the feedback mode includes an immediate feedback mode or a delayed feedback mode; and the first device receives the first PPDU from the second device.

Based on the foregoing technical solution, the second device may determine, based on the first information, the sensing measurement result feedback requirement corresponding to the target measurement configuration. In this way, it may be determined whether the second device meets the sensing measurement result feedback requirement corresponding to the target measurement configuration. This helps improve feedback efficiency. For example, if the sensing measurement result feedback requirement corresponding to the target measurement configuration includes the required duration from the moment at which the first device finishes sending the first PPDU to the moment at which the first device starts to send the second PPDU, and the second device can meet the required duration, it indicates that the first device has sufficient processing and reaction time to generate the second PPDU. In this way, the first device may report the second PPDU in the immediate feedback mode based on triggering of the second device. This can improve feedback efficiency.

With reference to the first aspect, in some implementations of the first aspect, when the N different measurement configurations do not include the target measurement configuration, a sensing measurement result feedback requirement corresponding to a first measurement configuration in the N different measurement configurations is the sensing measurement result feedback requirement corresponding to the target measurement configuration, and the following relationship exists between the first measurement configuration and the target measurement configuration: a value of a quantization bit value in the target measurement configuration is 8, a value of a quantization bit value in the first measurement configuration is 10, and a value of a remaining sensing measurement parameter in the first measurement configuration is the same as a value of a corresponding sensing measurement parameter in the target measurement configuration, where the quantization bit value is a quantization bit value of each real part or imaginary part corresponding to channel state information (channel state information, CSI); or a difference between a sensing measurement parameter in the target measurement configuration and a corresponding sensing measurement parameter in the first measurement configuration is minimum.

Based on the foregoing technical solution, even if the N different measurement configurations do not include the target measurement configuration, the second device may also determine, based on the first information, the sensing measurement result feedback requirement corresponding to the target measurement configuration.

With reference to the first aspect, in some implementations of the first aspect, each of the N different measurement configurations is determined based on one or more of the following: a value of a number of transmit antennas, a value of a number of receive antennas, a value of a subcarrier grouping size, a value of the quantization bit value of each real part or imaginary part corresponding to the CSI, and a value of a bandwidth.

Based on the foregoing technical solution, each of the N different measurement configurations may include one or more of the following parameters: a number of transmit antennas, a number of receive antennas, a subcarrier grouping size, a quantization bit value, or a bandwidth. Therefore, impact of different values of the foregoing one or more parameters on the sensing measurement result feedback requirement may be considered, that is, the first device can flexibly indicate sensing measurement result feedback requirements corresponding to different measurement configurations. This helps improve feedback efficiency.

With reference to the first aspect, in some implementations of the first aspect, the first information further indicates one or more of the following: t values of the number of transmit antennas, r values of the number of receive antennas, g values of the subcarrier grouping size, b values of the quantization bit value, and w values of the bandwidth, where t, r, g, b, and w are all positive integers.

Based on the foregoing technical solution, the second device may determine a value of each parameter based on the first information, so as to determine the N different measurement configurations based on the value of each parameter, and determine the sensing measurement result feedback requirement corresponding to each of the N different measurement configurations.

With reference to the first aspect, in some implementations of the first aspect, the first information indicates the t values of the number of transmit antennas in the following manner: The first information indicates a largest value in the t values; or the first information indicates a smallest value in the t values; or the first information includes T bits, where the T bits one-to-one correspond to T possible values of the number of transmit antennas, each of the T bits indicates whether the t values include a value corresponding to the bit, and T is a positive integer.

Based on the foregoing technical solution, different values of the number of transmit antennas can be flexibly indicated. This helps reduce overheads of the first information. For example, when the first device does not support five to eight transmit antennas, the first information may indicate that the t values include 1 to 4, so that a number of the N different measurement configurations can be reduced. When the number of the N different measurement configurations is reduced, the overheads of the first information can also be reduced.

With reference to the first aspect, in some implementations of the first aspect, the first information indicates the r values of the number of receive antennas in the following manner: The first information indicates a largest value in the r values; or the first information indicates a smallest value in the r values; or the first information includes R bits, where the R bits one-to-one correspond to R possible values of the number of receive antennas, each of the R bits indicates whether the r values include a value corresponding to the bit, and R is a positive integer.

Based on the foregoing technical solution, different values of the number of receive antennas can be flexibly indicated. This helps reduce the overheads of the first information. For example, when the first device does not support 5 to 8 receive antennas, the first information may indicate that the r values include 1 to 4, so that the number of the N different measurement configurations can be reduced. When the number of the N different measurement configurations is reduced, the overheads of the first information can also be reduced.

With reference to the first aspect, in some implementations of the first aspect, the first information indicates the g values of the subcarrier grouping size in the following manner: The first information indicates a largest value in the g values; or the first information indicates a smallest value in the g values; or the first information includes G bits, where the G bits one-to-one correspond to G possible values of the subcarrier grouping size, each of the G bits indicates whether the g values include a value corresponding to the bit, and G is a positive integer.

Based on the foregoing technical solution, different values of the subcarrier grouping size can be flexibly indicated. This helps reduce the overheads of the first information. For example, when the first device does not support a subcarrier grouping size of 16, the first information may indicate that the g values include 4 or 8, so that the number of the N different measurement configurations can be reduced. When the number of the N different measurement configurations is reduced, the overheads of the first information can also be reduced.

With reference to the first aspect, in some implementations of the first aspect, the first information indicates the b values of the quantization bit value in the following manner: The first information indicates a largest value in the b values; or the first information indicates a smallest value in the b values; or the first information includes B bits, where the B bits one-to-one correspond to B possible values of the number of receive antennas, each of the B bits indicates whether the b values include a value corresponding to the bit, and B is a positive integer.

Based on the foregoing technical solution, different values of the quantization bit value can be flexibly indicated. This helps reduce the overheads of the first information. For example, when the first device does not support a quantization bit value of 8, the first information may indicate that the b values include 10, so that the number of the N different measurement configurations can be reduced. When the number of the N different measurement configurations is reduced, the overheads of the first information can also be reduced.

With reference to the first aspect, in some implementations of the first aspect, the first information indicates the w values of the bandwidth in the following manner: The first information indicates a largest value in the w values; or the first information indicates a smallest value in the w values; or the first information includes W bits, where the W bits one-to-one correspond to W possible values of the bandwidth, each of the W bits indicates whether the w values include a value corresponding to the bit, and W is a positive integer.

Based on the foregoing technical solution, different values of the bandwidth can be flexibly indicated. This helps reduce the overheads of the first information. For example, when the first device does not support bandwidths of 160 MHz and 320 MHz, the first information may indicate that the w values include 20 MHz, 40 MHz, and 80 MHz, so that the number of the N different measurement configurations can be reduced. When the number of the N different measurement configurations is reduced, the overheads of the first information can also be reduced.

With reference to the first aspect, in some implementations of the first aspect, before the first device receives the first PPDU, the method further includes: The first device receives first indication information from the second device, where the first indication information indicates at least one of the following: the feedback mode used by the first device to send the second PPDU, whether the second device meets the sensing measurement result feedback requirement corresponding to the target measurement configuration, and duration that is capable of being ensured by the second device and that is from the moment at which the first device finishes receiving the first PPDU to a moment at which the first device starts to send a third PPDU, where the third PPDU is a PPDU sent by the first device to the second device in a first measurement instance, and the first measurement instance is a measurement instance in which the first device receives the first PPDU.

Based on the foregoing technical solution, after receiving the first indication information, the first device may determine, based on the first indication information, whether the second device meets the sensing measurement result feedback requirement corresponding to the target measurement configuration. Further, when the second device meets the sensing measurement result feedback requirement corresponding to the target measurement configuration, the first device may send the second PPDU in the immediate feedback mode. This improves feedback efficiency.

With reference to the first aspect, in some implementations of the first aspect, the second PPDU further includes one or more of the following: second indication information, an identifier of sensing measurement setup corresponding to the sensing measurement result, and an identifier of a sensing measurement instance corresponding to the sensing measurement result, where the second indication information indicates the feedback mode used for sending the second PPDU.

Based on the foregoing technical solution, the first device sends one or more of the following items to the second device: the second indication information, the identifier of sensing measurement setup corresponding to the sensing measurement result, and the identifier of the sensing measurement instance corresponding to the sensing measurement result, so that the second device may determine, based on the foregoing one or more items, the feedback mode used by the first device to send the second PPDU.

With reference to the first aspect, in some implementations of the first aspect, the sensing measurement result feedback requirement includes required duration from a moment at which the first device finishes receiving the first PPDU to a moment at which the first device starts to send the second PPDU in a same measurement instance.

According to a second aspect, a communication method is provided. The method may be performed by a communication device, or may be performed by a component (for example, a chip or a circuit) of a communication device. This is not limited. For ease of description, descriptions are provided below by using an example in which the method is performed by a second device.

The method includes: The second device receives first information from a first device, where the first information is used to determine a sensing measurement result feedback requirement corresponding to a target measurement configuration, the first information indicates a sensing measurement result feedback requirement corresponding to each of N different measurement configurations, and N is a positive integer; the sensing measurement result feedback requirement includes at least one of the following: required duration from a moment at which the first device receives a first PPDU to a moment at which the first device starts to send a second PPDU, or a feedback mode used by the first device to send the second PPDU; and the first PPDU is used by the first device to perform sensing measurement to obtain a sensing measurement result, the second PPDU includes the sensing measurement result, and the feedback mode includes an immediate feedback mode or a delayed feedback mode; and the second device sends the first PPDU to the first device.

For beneficial effect of any one of the second aspect or the possible implementations of the second aspect, refer to the first aspect.

With reference to the second aspect, in some implementations of the second aspect, the method further includes: If the N different measurement configurations include the target measurement configuration, the second device determines, based on the first information, the sensing measurement result feedback requirement corresponding to the target measurement configuration; or if the N different measurement configurations do not include the target measurement configuration, the second device determines, based on the first information, that a sensing measurement result feedback requirement corresponding to a first measurement configuration in the N different measurement configurations is the sensing measurement result feedback requirement corresponding to the target measurement configuration; or if the N different measurement configurations do not include the target measurement configuration, the second device determines that the sensing measurement result feedback requirement corresponding to the target measurement configuration is a preset feedback requirement. The following relationship exists between the first measurement configuration and the target measurement configuration: a value of a quantization bit value in the target measurement configuration is 8, a value of a quantization bit value in the first measurement configuration is 10, and a value of a remaining sensing measurement parameter in the first measurement configuration is the same as a value of a corresponding sensing measurement parameter in the target measurement configuration, where the quantization bit value is a quantization bit value of each real part or imaginary part corresponding to channel state information CSI; or a difference between a sensing measurement parameter included in the target measurement configuration and a corresponding sensing measurement parameter in the first measurement configuration is minimum.

With reference to the second aspect, in some implementations of the second aspect, each of the N different measurement configurations is determined based on one or more of the following: a value of a number of transmit antennas, a value of a number of receive antennas, a value of a subcarrier grouping size, a value of the quantization bit value of each real part or imaginary part corresponding to the CSI, and a value of a bandwidth.

With reference to the second aspect, in some implementations of the second aspect, the first information further indicates one or more of the following: t values of the number of transmit antennas, r values of the number of receive antennas, g values of the subcarrier grouping size, b values of the quantization bit value, and w values of the bandwidth, where t, r, g, b, and w are all positive integers.

With reference to the second aspect, in some implementations of the second aspect, the first information indicates the t values of the number of transmit antennas in the following manner: The first information indicates a largest value in the t values; or the first information indicates a smallest value in the t values; or the first information includes T bits, where the T bits one-to-one correspond to T possible values of the number of transmit antennas, each of the T bits indicates whether the t values include a value corresponding to the bit, and T is a positive integer.

With reference to the second aspect, in some implementations of the second aspect, the first information indicates the r values of the number of receive antennas in the following manner: The first information indicates a largest value in the r values; or the first information indicates a smallest value in the r values; or the first information includes R bits, where the R bits one-to-one correspond to R possible values of the number of receive antennas, each of the R bits indicates whether the r values include a value corresponding to the bit, and R is a positive integer.

With reference to the second aspect, in some implementations of the second aspect, the first information indicates the g values of the subcarrier grouping size in the following manner: The first information indicates a largest value in the g values; or the first information indicates a smallest value in the g values; or the first information includes G bits, where the G bits one-to-one correspond to G possible values of the subcarrier grouping size, each of the G bits indicates whether the g values include a value corresponding to the bit, and G is a positive integer.

With reference to the second aspect, in some implementations of the second aspect, the first information indicates the b values of the quantization bit value in the following manner: The first information indicates a largest value in the b values; or the first information indicates a smallest value in the b values; or the first information includes B bits, where the B bits one-to-one correspond to B possible values of the number of receive antennas, each of the B bits indicates whether the b values include a value corresponding to the bit, and B is a positive integer.

With reference to the second aspect, in some implementations of the second aspect, the first information indicates the w values of the bandwidth in the following manner: The first information indicates a largest value in the w values; or the first information indicates a smallest value in the w values; or the first information includes W bits, where the W bits one-to-one correspond to W possible values of the bandwidth, each of the W bits indicates whether the w values include a value corresponding to the bit, and W is a positive integer.

With reference to the second aspect, in some implementations of the second aspect, before the second device sends the first PPDU, the method further includes: If the second device meets the sensing measurement result feedback requirement corresponding to the target measurement configuration, the second device sends first indication information to the first device, where the first indication information indicates the first device to send the second PPDU in the immediate feedback mode, or indicates that the second device is capable of meeting the sensing measurement result feedback requirement corresponding to the target measurement configuration; or if the second device does not meet the sensing measurement result feedback requirement corresponding to the target measurement configuration, the second device sends first indication information to the first device, where the first indication information indicates the first device to send the second PPDU in the delayed feedback mode, or indicates that the second device is not capable of meeting the sensing measurement result feedback requirement corresponding to the target measurement configuration; or the second device sends first indication information to the first device, where the first indication information indicates duration that is capable of being ensured by the second device and that is from the moment at which the first device finishes receiving the first PPDU to a moment at which the first device starts to send a third PPDU, the third PPDU is a PPDU sent by the first device to the second device in a first measurement instance, and the first measurement instance is a measurement instance in which the first device receives the first PPDU.

With reference to the second aspect, in some implementations of the second aspect, the second PPDU further includes one or more of the following: second indication information, an identifier of sensing measurement setup corresponding to the sensing measurement result, and an identifier of a sensing measurement instance corresponding to the measurement result, where the second indication information indicates the feedback mode used for sending the second PPDU.

With reference to the second aspect, in some implementations of the second aspect, the sensing measurement result feedback requirement includes required duration from a moment at which the first device finishes receiving the first PPDU to a moment at which the first device starts to send the second PPDU in a same measurement instance.

According to a third aspect, a communication method is provided. The method may be performed by a communication device, or may be performed by a component (for example, a chip or a circuit) of a communication device. This is not limited. For ease of description, descriptions are provided below by using an example in which the method is performed by a first device.

The method includes: The first device receives a target measurement configuration from a second device; the first device sends third indication information to the second device, where the third indication information indicates a sensing measurement result feedback requirement corresponding to the target measurement configuration; the sensing measurement result feedback requirement includes at least one of the following: required duration from a moment at which the first device finishes receiving a first PPDU to a moment at which the first device starts to send a second PPDU, or a feedback mode used by the first device to send the second PPDU; and the first PPDU is used by the first device to perform sensing measurement to obtain a sensing measurement result, the second PPDU includes the sensing measurement result, and the feedback mode includes an immediate feedback mode or a delayed feedback mode; and the first device receives the first PPDU from the second device.

Based on the foregoing technical solution, if the first device receives the target measurement configuration from the second device, the first device may indicate, to the second device via the third indication information, the sensing measurement result feedback requirement corresponding to the target measurement configuration. This helps improve feedback efficiency. For example, if the sensing measurement result feedback requirement includes the required duration from the moment at which the first device finishes sending the first PPDU to the moment at which the first device starts to send the second PPDU, and the second device can meet the required duration, it indicates that the first device has sufficient processing and reaction time to generate the second PPDU. In this way, the first device may report the second PPDU in the immediate feedback mode based on triggering of the second device. This can improve feedback efficiency.

With reference to the third aspect, in some implementations of the third aspect, the target measurement configuration includes one or more of the following sensing measurement parameters: a target number of transmit antennas, a target number of receive antennas, a target subcarrier grouping size, a target quantization bit value of each real part or imaginary part corresponding to CSI, and a target bandwidth.

Based on the foregoing technical solution, when the target measurement configuration includes the foregoing parameter, the first device may consider impact of the foregoing parameter on the sensing measurement result feedback requirement, to determine a more proper sensing measurement result feedback requirement.

With reference to the third aspect, in some implementations of the third aspect, before the first device receives the first PPDU, the method further includes: The first device receives first indication information from the second device, where the first indication information indicates at least one of the following: the feedback mode used by the first device to send the second PPDU, whether the second device meets the sensing measurement result feedback requirement corresponding to the target measurement configuration, and duration that is capable of being ensured by the second device and that is from the moment at which the first device finishes receiving the first PPDU to a moment at which the first device starts to send a third PPDU, where the third PPDU is a PPDU sent by the first device to the second device in a first measurement instance, and the first measurement instance is a measurement instance in which the first device receives the first PPDU.

Based on the foregoing technical solution, after receiving the first indication information, the first device may determine, based on the first indication information, whether the second device meets the sensing measurement result feedback requirement corresponding to the target measurement configuration. Further, when the second device meets the sensing measurement result feedback requirement corresponding to the target measurement configuration, the first device may send the second PPDU in the immediate feedback mode. This improves feedback efficiency.

With reference to the third aspect, in some implementations of the third aspect, the second PPDU further includes one or more of the following: second indication information, an identifier of sensing measurement setup corresponding to the sensing measurement result, and an identifier of a sensing measurement instance corresponding to the sensing measurement result, where the second indication information indicates the feedback mode used for sending the second PPDU.

Based on the foregoing technical solution, the first device sends one or more of the following items to the second device: the second indication information, the identifier of sensing measurement setup corresponding to the sensing measurement result, and the identifier of the sensing measurement instance corresponding to the sensing measurement result, so that the second device may determine, based on the foregoing one or more items, the feedback mode used by the first device to send the second PPDU.

With reference to the third aspect, in some implementations of the third aspect, the sensing measurement result feedback requirement includes required duration from a moment at which the first device finishes receiving the first PPDU to a moment at which the first device starts to send the second PPDU in a same measurement instance.

According to a fourth aspect, a communication method is provided. The method may be performed by a communication device, or may be performed by a component (for example, a chip or a circuit) of a communication device. This is not limited. For ease of description, descriptions are provided below by using an example in which the method is performed by a second device.

The method includes: The second device sends a target measurement configuration to a first device; the second device receives third indication information from the first device, where the third indication information indicates a sensing measurement result feedback requirement corresponding to the target measurement configuration; the sensing measurement result feedback requirement includes at least one of the following: required duration from a moment at which the first device finishes receiving a first PPDU to a moment at which the first device starts to send a second PPDU, or a feedback mode used by the first device to send the second PPDU; and the first PPDU is used by the first device to perform sensing measurement to obtain a sensing measurement result, the second PPDU includes the sensing measurement result, and the feedback mode includes an immediate feedback mode or a delayed feedback mode; and the second device sends the first PPDU to the first device.

For beneficial effect of any one of the second aspect or the possible implementations of the second aspect, refer to the third aspect.

With reference to the fourth aspect, in some implementations of the fourth aspect, the target measurement configuration includes a sensing measurement setup element, and the sensing measurement setup element includes a report type field.

With reference to the fourth aspect, in some implementations of the fourth aspect, the report type field is set to 3, 5, 6, or 7.

With reference to the fourth aspect, in some implementations of the fourth aspect, the third indication information includes a burst response delay subelement, and the burst response delay subelement includes time spent by the first device to generate a sensing measurement report after the first PPDU ends. With reference to the fourth aspect, in some implementations of the fourth aspect, the target measurement configuration includes one or more of the following sensing measurement parameters: a target number of transmit antennas, a target number of receive antennas, a target subcarrier grouping size, a target quantization bit value of each real part or imaginary part corresponding to CSI, and a target bandwidth.

With reference to the fourth aspect, in some implementations of the fourth aspect, before the second device sends the first PPDU, the method further includes: If the second device meets the sensing measurement result feedback requirement corresponding to the target measurement configuration, the second device sends first indication information to the first device, where the first indication information indicates the first device to send the second PPDU in the immediate feedback mode, or indicates that the second device is capable of meeting the sensing measurement result feedback requirement corresponding to the target measurement configuration; or if the second device does not meet the sensing measurement result feedback requirement corresponding to the target measurement configuration, the second device sends first indication information to the first device, where the first indication information indicates the first device to send the second PPDU in the delayed feedback mode, or indicates that the second device is not capable of meeting the sensing measurement result feedback requirement corresponding to the target measurement configuration; or the second device sends first indication information to the first device, where the first indication information indicates duration that is capable of being ensured by the second device and that is from the moment at which the first device finishes receiving the first PPDU to a moment at which the first device starts to send a third PPDU, the third PPDU is a PPDU sent by the first device to the second device in a first measurement instance, and the first measurement instance is a measurement instance in which the first device receives the first PPDU.

With reference to the fourth aspect, in some implementations of the fourth aspect, the second PPDU further includes one or more of the following: second indication information, an identifier of sensing measurement setup corresponding to the sensing measurement result, and an identifier of a sensing measurement instance corresponding to the measurement result, where the second indication information indicates the feedback mode used for sending the second PPDU.

With reference to the fourth aspect, in some implementations of the fourth aspect, the sensing measurement result feedback requirement includes required duration from a moment at which the first device finishes receiving the first PPDU to a moment at which the first device starts to send the second PPDU in a same measurement instance.

According to a fifth aspect, an apparatus is provided. The apparatus is configured to perform the method provided in any one of the first aspect to the fourth aspect. Specifically, the apparatus may include a unit and/or a module configured to perform the method provided in any one of the first aspect or the foregoing implementations of the first aspect, or include a unit and/or a module configured to perform the method provided in any one of the second aspect or the foregoing implementations of the second aspect, or include a unit and/or a module configured to perform the method provided in any one of the third aspect or the foregoing implementations of the third aspect, or include a unit and/or a module configured to perform the method provided in any one of the fourth aspect or the foregoing implementations of the fourth aspect, for example, a processing unit and/or a transceiver unit.

In an implementation, the apparatus is a device (for example, a first device or a second device). When the apparatus is the device, the transceiver unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a device (for example, a first device or a second-end device). When the apparatus is the chip, the chip system, or the circuit used in the device, the transceiver unit may be an input/output interface, an interface circuit, an output circuit, an input circuit, a pin, a related circuit, or the like in the chip, the chip system, or the circuit; and the processing unit may be at least one processor, a processing circuit, a logic circuit, or the like.

According to a sixth aspect, an apparatus is provided. The apparatus includes: a memory, configured to store a program; and at least one processor, configured to execute a computer program or instructions stored in the memory, to perform the method provided in any one of the first aspect to the fourth aspect.

In an implementation, the apparatus is a device (for example, a first device or a second device).

In another implementation, the apparatus is a chip, a chip system, or a circuit used in a device (for example, a first device or a second device).

According to a seventh aspect, this application provides a processor. The processor is configured to perform the methods provided in the foregoing aspects.

Operations such as sending and/or receiving related to the processor may be understood as operations such as outputting, receiving, and inputting of the processor or sending and receiving operations performed by a radio frequency circuit and an antenna, unless otherwise specified, or provided that the operations do not contradict actual functions or internal logic of the operations in related descriptions. This is not limited in this application.

According to an eighth aspect, a computer-readable storage medium is provided. The computer-readable storage medium stores program code executed by a device. When the program code is run on a computer, the method provided in any one of the first aspect to the fourth aspect is performed.

According to a ninth aspect, a computer program product including instructions is provided. When the computer program product runs on a computer, the computer is enabled to perform the method provided in any one of the first aspect to the fourth aspect.

According to a tenth aspect, a chip is provided. The chip includes a processor and a communication interface. The processor reads, through the communication interface, instructions stored in a memory, to perform the method provided in any one of the first aspect to the fourth aspect.

Optionally, in an implementation, the chip further includes the memory. The memory stores a computer program or the instructions. The processor is configured to execute the computer program or instructions stored in the memory. When the computer program or instructions are executed, the processor is configured to perform the method provided in any one of the first aspect to the fourth aspect.

According to an eleventh aspect, a communication system is provided, including the foregoing first device and second device.

## BRIEF DESCRIPTION OF DRAWINGS

FIG. 1 is a diagram of a system architecture applicable to an embodiment of this application;

FIG. 2 is a diagram of a sensing procedure applicable to an embodiment of this application;

FIG. 3 is a diagram of a one-to-one setup phase in a sensing procedure;

FIG. 4 shows a centralized example of sensing measurement instances;

FIG. 5 is a diagram of immediate feedback and delayed feedback;

FIG. 6 is a schematic flowchart of a communication method according to an embodiment of this application;

FIG. 7 is a diagram of first information according to an embodiment of this application;

FIG. 8 is a diagram in which a second device meets target required duration;

FIG. 9 is a diagram of first information according to an embodiment of this application;

FIG. 10 is a schematic flowchart of a communication method according to an embodiment of this application;

FIG. 11 is a diagram of an apparatus 1100 according to an embodiment of this application;

FIG. 12 is a diagram of an apparatus 1200 according to an embodiment of this application; and

FIG. 13 is a diagram of a chip system 1300 according to an embodiment of this application.

## DESCRIPTION OF EMBODIMENTS

The following describes technical solutions in embodiments of this application with reference to accompanying drawings.

The technical solutions provided in this application are applicable to a wireless local area network (wireless local area network, WLAN) system, for example, are applicable to an IEEE 802.11-related standard like the 802.11a/b/g standard, the 802.11n standard, the 802.11ac standard, the 802.11ax standard, the 802.11bf standard, or another future standard.

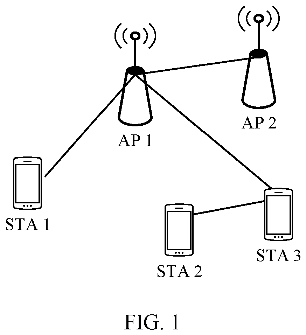

FIG. 1 is an example of a system architecture applicable to an embodiment of this application. As shown in FIG. 1, a communication method provided in this application is applicable to data communication between an access point (access point, AP) and one or more stations (station, STA) (for example, data communication between an AP 1 and a STA 1, and between the AP 1 and a STA 3), and is also applicable to data communication between APs (for example, data communication between the AP 1 and an AP 2) and data communication between STAs (for example, data communication between a STA 2 and the STA 3).

Although embodiments of this application are mainly described by using an example in which a WLAN network is deployed, and in particular, a network to which the institute of electrical and electronics engineers (institute of electrical and electronics engineers, IEEE) 802.11 system standards are applied is deployed, a person skilled in the art easily understands that aspects in this application may be extended to other networks that use various standards or protocols, for example, Bluetooth (Bluetooth), high-performance radio LAN (high-performance radio LAN, HiperLAN), a wide area network (WAN), a personal area network (personal area network, PAN), or another network that is known or developed in the future. Therefore, regardless of a used coverage area and wireless access protocol, various aspects provided in this application are applicable to any suitable wireless network.

Embodiments of this application are further applicable to a wireless local area network system, like the internet of things (internet of things, IoT) or the vehicle-to-everything (Vehicle to X, V2X). Certainly, embodiments of this application are further applicable to other possible communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) communication system, and a future 6th generation (6th generation, 6G) communication system. The foregoing communication systems applicable to this application are merely examples for description, and the communication systems applicable to this application are not limited thereto. This is uniformly described herein, and details are not described below again.

The access point may be an access point used by a terminal (for example, a mobile phone) to access a wired (or wireless) network, and is mainly deployed at home, in a building, and in a park. A typical coverage radius is tens of meters to 100-odd meters. Certainly, the access point may alternatively be deployed outdoors. The access point is equivalent to a bridge that connects a wired network and a wireless network. A main function of the access point is to connect various wireless network clients together and then connect the wireless network to the Ethernet. Specifically, the access point may be a terminal (for example, a mobile phone) or a network device (for example, a router) with a Wi-Fi chip. The access point may be a device that supports the 802.11be standard. Alternatively, the access point may be a device that supports a plurality of WLAN standards of the 802.11 family, such as 802.11ax, 802.11ac, 802.11n, 802.11g, 802.11b, 802.11a, and a next generation standard of 802.11be. The access point in this application may be a high-efficiency (high-efficient, HE) AP, an extremely high throughput (extremely high throughput, EHT) AP, or an access point applicable to a future generation Wi-Fi standard.

The station may be a wireless communication chip, a wireless sensor, a wireless communication terminal, or the like, and may also be referred to as a user. For example, the station may be a mobile phone, a tablet computer, a set-top box, a smart television set, a smart wearable device, a vehicle-mounted communication device, a computer, or the like that supports a Wi-Fi communication function. Optionally, the station may support the 802.11be standard. Alternatively, the station may support the plurality of WLAN standards of the 802.11 family, such as 802.11ax, 802.11ac, 802.11n, 802.11g, 802.11b, 802.11a, and the next-generation standard of 802.11be.

In daily life, a signal sent by a Wi-Fi device is usually received after the signal is reflected, diffracted, and scattered by various obstacles. Due to this phenomenon, the actually received signal is usually obtained by superimposing a plurality of signals, that is, a channel environment may become complex. However, from another perspective, this also facilitates sensing, via a wireless signal, of a physical environment that the wireless signal passes through. A surrounding environment can be inferred and sensed by analyzing a wireless signal, for example, channel state information (channel state information, CSI), affected by various obstacles, to derive a WLAN sensing technology. Due to wide deployment of Wi-Fi devices and an increase in sensing requirements, sensing performed by widely available Wi-Fi devices is a hot topic of current research.

Currently, the WLAN sensing technology mainly involves the following roles:

(1) A sensing initiator is a station that initiates a sensing procedure.
Sensing initiator: a STA that initiates a WLAN sensing procedure.
(2) A sensing responder is a station that participates in the sensing procedure initiated by the sensing initiator.
Sensing responder: a STA that participates in a WLAN sensing procedure initiated by a sensing initiator.
(3) A sensing transmitter is a station that sends a physical layer protocol data unit (physical protocol data unit, PPDU) for sensing measurement in the sensing procedure.
Sensing transmitter: a STA that transmits PPDUs used for sensing measurements in a sensing procedure.
(4) A sensing receiver is a station that receives the PPDU sent by the sensing transmitter and performs sensing measurement in the sensing procedure.

Sensing receiver: a STA that receives PPDUs sent by a sensing transmitter and performs sensing measurements in a sensing procedure.

The sensing procedure may be used to describe how to perform sensing, and the sensing procedure may include the following five steps:

(1) Sensing session setup (sensing session setup): Sensing session setup indicates that a sensing session is set up between stations. Some sensing-related parameters may be exchanged here (to be determined). It should be noted that a sensing session is a session set up between two stations: a sensing initiator and a sensing responder. One sensing initiator may set up sensing sessions with a plurality of sensing responders one by one, but the sensing sessions still need to be set up one by one. For example, the sensing initiator sets up the sensing sessions with the plurality of sensing responders one by one in an orthogonal frequency division multiple access (orthogonal frequency division multiple access, OFDMA) manner or a multi-user multiple-input multiple-output (multi-user multiple-input multiple-output, MU-MIMO) manner.
(2) Sensing measurement setup (sensing measurement setup): Sensing measurement setup is used to exchange and unify some parameters and attributes to be used in the sensing procedure between the sensing initiator and the sensing responder, for example, parameters such as a role of the sensing initiator, a role of the sensing responder, and a measurement feedback type. For example, the role of the sensing initiator may be a sensing transmitter or a sensing receiver, and the role of the sensing responder may be a sensing transmitter or a sensing receiver. Sensing measurement setup may be referred to as measurement setup for short. Sensing measurement setup may be identified by using <identifier of the sensing initiator and sensing measurement setup identifier>.
(3) Sensing measurement instance (sensing measurement instance): Sensing measurement occurs in the sensing measurement instance. A plurality of sensing responders are allowed to participate in one sensing measurement instance. Sensing measurement instance setup may also be referred to as a sensing measurement entity, and the sensing measurement entity may be referred to as a measurement entity or an entity for short. A plurality of sensing measurement instances corresponding to same sensing measurement may be identified by using a sensing measurement instance identifier.
(4) Sensing measurement setup termination (sensing measurement setup termination): Sensing measurement setup termination is used to terminate a process of measurement setup corresponding to a sensing responder. After termination, the sensing responder is no longer bound to the corresponding measurement setup, but may still be in the sensing session. Sensing measurement setup termination may be referred to as measurement setup termination for short.
(5) Sensing session termination (sensing session termination): Sensing session termination indicates termination of the sensing session. After the sensing session is terminated, the station does not participate in the process like sensing measurement.

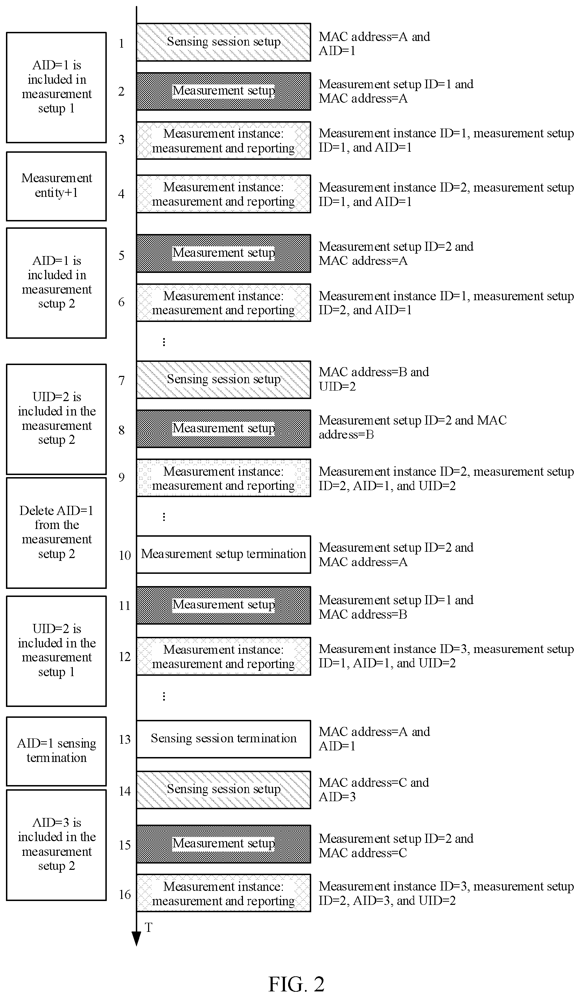

FIG. 2 is a diagram of a sensing procedure, to describe how to perform the sensing procedure as an example.

Specifically, FIG. 2 shows 16 phases in the sensing procedure, and the 16 phases can indicate a specific procedure of the sensing procedure. In FIG. 2, a horizontal coordinate indicates time T.

A phase 1 indicates that a station (denoted as a station #1) whose medium access control (medium access control, MAC) address is A and whose association identifier (association identifier, AID) is 1 participates in a sensing session, that is, a sensing session setup procedure.

A phase 2 indicates that a related parameter is configured for the station #1, that is, sensing measurement setup. To clearly identify different sensing measurement setup, a manner of labeling the sensing measurement setup is used. In the phase 2, an identifier (identifier, ID) of measurement setup is 1, and the measurement setup is denoted as measurement setup 1.

A phase 3 is a measurement instance. One measurement instance is bound to one sensing measurement setup identifier. Therefore, the station #1 whose AID=1 may be measured in the measurement instance. Each measurement instance also has a corresponding label. An ID of the measurement instance in the phase 3 is 1, and the measurement instance is denoted as a measurement instance 1. In addition, the measurement instance 1 is bound to the measurement setup 1.

To sum up, the phases 1, 2, and 3 are used to make the station #1 participate in the sensing session and start measurement and feedback.

A phase 4 indicates that another measurement instance occurs. To distinguish from the measurement instance in the phase 3, an identifier of the measurement instance in the phase 4 is +1, that is, a measurement instance 2 corresponding to the measurement setup 1.

Phases 5 and 6 are similar to the phases 2 and 3, and are used to configure measurement setup 2 for the station #1, and perform measurement and feedback in the measurement instance 1 corresponding to the measurement setup 2.

Phases 7, 8, and 9 are similar to the phases 1, 2, and 3, and are used to make a station (denoted as a station #2) whose unassociated identifier (Unassociated identifier, UID) is 2 participate in a sensing session, assign measurement setup ID=2, and make the measurement instance 2 occur after the measurement setup 2. Therefore, in the phase 9, both the station whose AID=1 and the station whose UID=2 perform measurement in the measurement instance 2 corresponding to the measurement setup 2, that is, the station whose AID=1 and the station whose UID=2 may participate in sensing measurement and feedback at the same time.

A phase 10 is measurement setup termination, and indicates that the station whose AID=1 is unbound from the measurement setup 2.

Phases 11 and 12 indicate that the measurement setup 1 is configured for the station whose UID=2, and a measurement instance 3 occurs after the measurement setup 1. Therefore, in the phase 12, both the station whose AID=1 and the station whose UID=2 perform measurement in the measurement instance 3 corresponding to the measurement setup 1.

It should be understood that although the station whose AID=1 is unbound from the measurement setup 2 in the phase 10, the station whose AID=1 is still in the sensing session. Therefore, the station whose AID=1 may still perform measurement in the measurement instance 3 corresponding to the measurement setup 1.

A phase 13 is sensing session termination, and indicates that the station whose AID=1 exits the sensing session.

Phases 14, 15, and 16 are similar to the phases 1, 2, and 3, and indicate that a station whose AID=3 participates in a sensing session and is bound to the measurement setup 2. Therefore, in the phase 16, both the station whose AID=3 and the station whose UID=2 perform measurement in the measurement instance 3 corresponding to the measurement setup 2. That is, the station whose AID=3 and the station whose UID=2 can participate in sensing measurement and feedback at the same time.

It should be understood that sensing initiators in the 16 phases shown in FIG. 2 are a same device.

The sensing measurement instance phase in FIG. 2 may be regarded as a one-to-many setup phase. To be specific, in a sensing measurement instance, one sensing initiator may make a plurality of sensing responders participate in sensing measurement and feedback at the same time. Other phases are one-to-one setup phases.

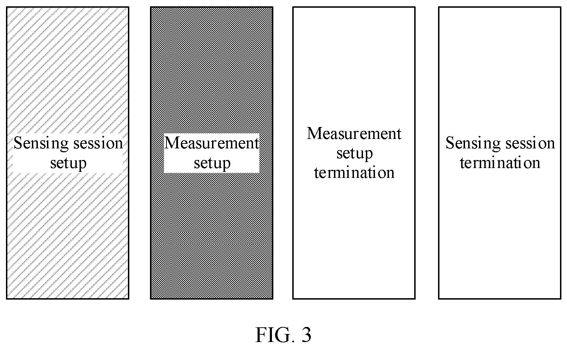

FIG. 3 shows a one-to-one setup phase, where sensing session setup, sensing measurement setup, measurement setup termination, and sensing session termination in FIG. 3 are all completed in a one-to-one setup manner. The sensing session setup phase is used as an example. One sensing session setup corresponds to one sensing initiator and one sensing responder. Certainly, a sensing initiator may alternatively set up a procedure with a plurality of stations at the same time, for example, in an OFDMA form or an MU-MIMO form. However, this belongs to that a plurality of sensing sessions are set up at the same time, and cannot be counted as one sensing session.

A measurement instance phase is different from the four phases shown in FIG. 3. A one-to-many case may occur in one measurement instance. For example, one sensing initiator sends an announcement frame (announcement frame) and a trigger frame (trigger frame) to a plurality of sensing responders.

Currently, in a sensing procedure, a trigger-based (trigger-based, TB) sensing procedure and a non-trigger-based sensing procedure are supported. In the trigger-based sensing procedure, a sensing initiator may use a trigger frame to trigger measurement and feedback of a peer device. In the trigger-based sensing procedure, after processes such as sensing session setup and measurement setup, sensing devices may perform a procedure of sending and receiving a sensing measurement instance based on the trigger frame.

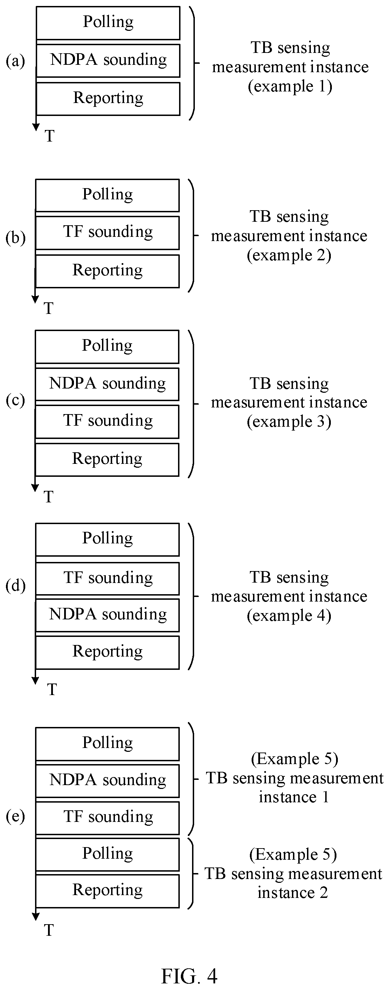

FIG. 4 shows several examples of sensing measurement instances. As shown in (a) in FIG. 4, a sensing measurement instance includes a polling phase (polling phase), a null data PPDU announcement (null data PPDU announcement, NDPA) sounding phase (NDPA sounding phase), and a reporting phase (reporting phase). As shown in (b) in FIG. 4, a sensing measurement instance includes a polling phase, a trigger frame (trigger frame, TF) sounding phase (TF sounding phase), and a reporting phase (reporting phase). As shown in (c) in FIG. 4, (d) in FIG. 4, and (e) in FIG. 4, a sensing measurement instance includes a polling phase, an NDPA sounding phase, a TF sounding phase, and a reporting phase.

It should be understood that five sensing measurement instances shown in FIG. 4 are all trigger-based (trigger-based, TB) sensing measurement instances.

Generally, a sensing initiator may interact with a sensing responder in the sensing measurement instance shown in FIG. 4. Specifically, the phases included in the sensing measurement instance shown in FIG. 4 are described as follows: The sensing initiator consults, in the polling phase, a user who wants to participate in the measurement instance

The sensing initiator sends an NDPA and a null data PPDU (null data PPDU, NDP) to the sensing responder in the NDPA sounding phase. The NDPA and the NDP are PPDUs used for sensing measurement. It should be understood that, in this phase, the sensing initiator is a sensing transmitter, and the sensing responder is a sensing receiver.

The sensing initiator sends a trigger frame to the sensing responder in the TF sounding phase, and the sensing responder sends an NDP to the sensing initiator under triggering of the trigger frame, where the NDP is a PPDU used for sensing measurement. It should be understood that, in this phase, the sensing responder is a sensing transmitter, and the sensing initiator is a sensing receiver.

The sensing initiator sends a trigger frame to the sensing responder in the reporting phase, to trigger the sensing responder to feed back sensing content to the sensing initiator, where the sensing content includes a sensing measurement result.

In the reporting phase, there are two feedback modes: immediate feedback (immediate feedback) and delayed feedback (delayed feedback). When immediate feedback is negotiated between two sensing devices, a sensing responder feeds back a sensing measurement result in the same sensing measurement instance in the reporting phase of the sensing measurement instance. When delayed feedback is negotiated between two devices, a sensing responder feeds back a sensing measurement result of a previous sensing measurement instance in the reporting phase of the sensing measurement instance.

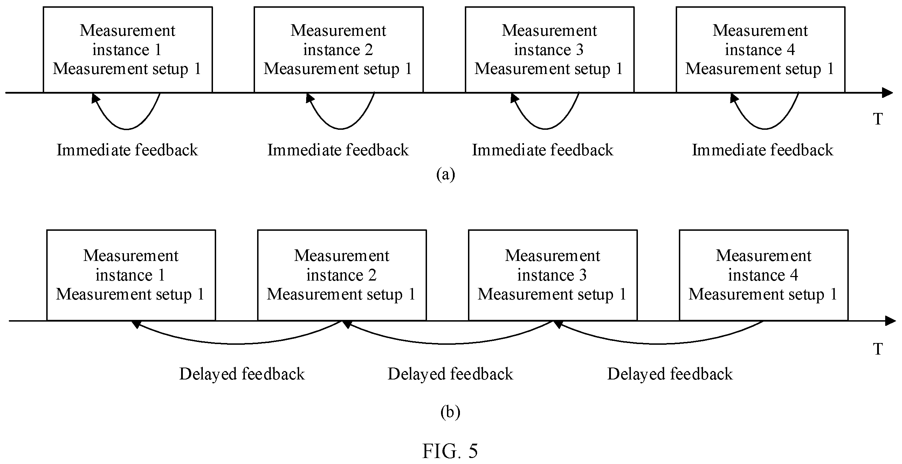

FIG. 5 is a diagram of immediate feedback and delayed feedback. (a) in FIG. 5 is a diagram of immediate feedback. As shown in (a) in FIG. 5, measurement instances 1, 2, 3, and 4 in measurement setup 1 are respectively used to feed back sensing measurement results in the measurement instances 1, 2, 3, and 4. (b) in FIG. 5 is a diagram of delayed feedback. As shown in (b) in FIG. 5, a measurement result obtained in a previous measurement instance is reported in a reporting phase of a next measurement instance. Specifically, a measurement instance 2 in measurement setup 1 is used to feed back a sensing measurement result in a measurement instance 1, a measurement instance 3 is used to feed back a sensing measurement result in the measurement instance 2, and a measurement instance 4 is used to feed back a sensing measurement result in the measurement instance 3. It may be understood that occurrence time of the measurement instance 2 is later than occurrence time of the measurement instance 1, occurrence time of the measurement instance 3 is later than occurrence time of the measurement instance 2, and occurrence time of the measurement instance 4 is later than the occurrence time of the measurement instance 3. Any two measurement instances in the measurement instance 1 to the measurement instance 4 correspond to same sensing measurement setup, or correspond to different sensing measurement setup.

To resolve a problem that in a delayed mode, feedback efficiency is low because content that is fed back due to triggering of a trigger frame in a current measurement instance needs to be delayed to a subsequent measurement instance for feedback, this application provides a communication solution, to improve sensing feedback efficiency.

A first device mentioned in embodiments of this application is an example of a sensing responder, and a second device is an example of a sensing initiator. In other words, the first device is a device that receives a trigger frame used to trigger sensing feedback, and the second device is a device that sends a trigger frame used to trigger sensing feedback. Details are not described below again. For example, the first device may be a STA, and the second device may be an AP, for example, the AP 1 and the STA 1. Alternatively, both the first device and the second device are STAs in FIG. 1, for example, the STA 2 and the STA 3. Alternatively, both the first device and the second device are APs, for example, the AP 1 and the AP 2.

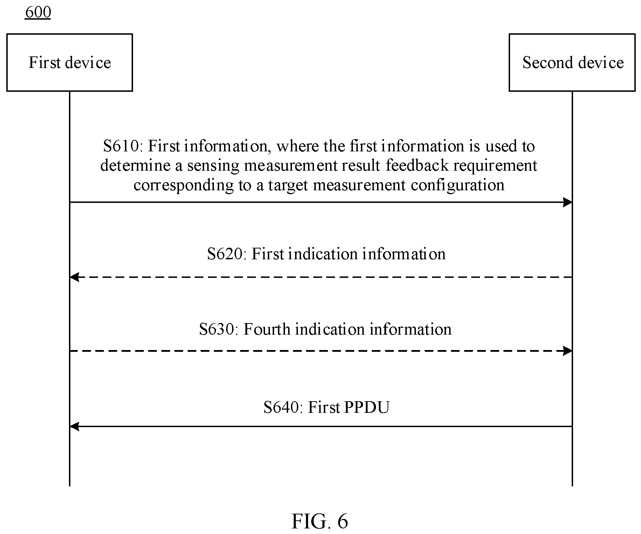

FIG. 6 is a schematic flowchart of a communication method according to an embodiment of this application. The method 600 shown in FIG. 6 may include the following steps.

S610: A first device sends first information to a second device, where the first information is used to determine a sensing measurement result feedback requirement corresponding to a target measurement configuration.

Correspondingly, the second device receives the first information from the first device. After receiving the first information, the second device may determine, based on the first information, the sensing measurement result feedback requirement corresponding to the target measurement configuration, that is, the first information is used by the second device to determine the sensing measurement result feedback requirement corresponding to the target measurement configuration.

The target measurement configuration is a measurement configuration used by the second device to perform sensing measurement, and the target measurement configuration includes one or more of the following sensing measurement parameters: a target number of transmit antennas, a target number of receive antennas, a target subcarrier grouping size, a target quantization bit value of each real part or imaginary part corresponding to channel state information (channel state information, CSI), or a target bandwidth. The target number of transmit antennas is a number of antennas used by the first device to transmit a signal in a process of performing sensing measurement. The target number of receive antennas is a number of antennas used by the first device to receive a signal in the process of performing sensing measurement. The target bandwidth is a bandwidth of a frequency domain resource used by the first device in the process of performing sensing measurement. The target subcarrier grouping size and a target quantization bit are parameters used by the first device in a sensing measurement reporting phase. The target subcarrier grouping size indicates a number of subcarriers for feeding back CSI of one subcarrier. The target quantization bit value is a quantization bit value used when the first device feeds back the CSI.

The sensing measurement result feedback requirement includes at least one of the following: required duration from a moment at which the first device finishes receiving a first PPDU to a moment at which the first device starts to send a second PPDU, or a feedback mode used by the first device to send a second PPDU. The feedback mode includes an immediate feedback mode or a delayed feedback mode. Because the first device uses a measurement configuration in the process of performing sensing measurement, the sensing measurement result feedback requirement may be understood as a feedback requirement for sending the second PPDU by the first device by using the measurement configuration. In other words, the sensing measurement result feedback requirement includes at least one of the following: the required duration from the moment at which the first device finishes receiving the first PPDU by using the measurement configuration to the moment at which the first device starts to send the second PPDU, or the feedback mode used by the first device to send the second PPDU by using the measurement configuration. For example, the sensing measurement result feedback requirement corresponding to the target measurement configuration includes at least one of the following: the required duration from the moment at which the first device finishes receiving the first PPDU by using the target measurement configuration to the moment at which the first device starts to send the second PPDU by using the target measurement configuration, or the feedback mode used by the first device to send the second PPDU by using the target measurement configuration.

For ease of description, the sensing measurement result feedback requirement corresponding to the target measurement configuration is denoted as a target feedback requirement below. The duration that is included in the sensing measurement result feedback requirement corresponding to the target measurement configuration and that is from the moment at which the first device finishes receiving the first PPDU to the moment at which the first device starts to send the second PPDU is denoted as target required duration. The feedback mode that is used by the first device to send the second PPDU and that is included in the sensing measurement result feedback requirement corresponding to the target measurement configuration is denoted as a target feedback mode.

For example, the first PPDU is an NDP in an NDPA sounding phase, and the first PPDU is used by the first device to perform sensing measurement to obtain a sensing measurement result. The second PPDU includes the sensing measurement result.

Optionally, the required duration from the moment at which the first device finishes receiving the first PPDU to the moment at which the first device starts to send the second PPDU may be understood as one of the following:

minimum duration from the moment at which the first device finishes receiving the first PPDU to the moment at which the first device starts to send the second PPDU;
required duration from the moment at which the first device finishes receiving the first PPDU to the moment at which the first device starts to send the second PPDU in a same measurement instance; or
minimum duration from the moment at which the first device finishes receiving the first PPDU to the moment at which the first device starts to send the second PPDU in a same measurement instance.

Optionally, the moment at which the first device finishes receiving the first PPDU may be a moment at which the second device finishes sending the first PPDU. Similarly, the moment at which the first device starts to send the second PPDU may be a moment at which the second device starts to receive the second PPDU. This is not limited.

Optionally, the immediate feedback mode may be understood as one of the following:

The first device receives the first PPDU and sends the second PPDU in a same measurement instance; or
in the immediate feedback mode without time requirement limitation, that is, regardless of actual duration from the moment at which the first device finishes receiving the first PPDU to the moment at which the first device starts to send the second PPDU, the first device may immediately perform feedback provided that the first device receives a trigger frame from the second device, to be specific, the first device sends the second PPDU to the second device.

Optionally, the delayed feedback mode may be understood as one of the following:

The first device receives the first PPDU in a first measurement instance, and sends the second PPDU in a second measurement instance, where occurrence time of the second measurement instance is later than occurrence time of the first measurement instance; or

the first device sends the second PPDU in another measurement instance different from the first measurement instance; or

the actual duration from the moment at which the first device finishes receiving the first PPDU to the moment at which the first device starts to send the second PPDU is greater than preset duration.

For example, before a sensing measurement setup procedure, the first device sends the first information to the second device. For example, before the first device receives sensing measurement setup request (sensing measurement setup request) information from the second device, the first device sends the first information to the second device.

Optionally, the method 600 further includes S620.

S620: The second device sends first indication information to the first device.

Correspondingly, the first device receives the first indication information from the second device.

The first indication information indicates at least one of the following: the feedback mode used by the first device to send the second PPDU, whether the second device can meet the target feedback requirement, and duration that is capable of being ensured by the second device and that is from the moment at which the first device finishes receiving the first PPDU to a moment at which the first device starts to send a third PPDU. The third PPDU is a PPDU sent by the first device to the second device in the first measurement instance, and the first measurement instance is a measurement instance in which the first device receives the first PPDU.

For ease of understanding, the duration that is capable of being ensured by the second device and that is from the moment at which the first device finishes receiving the first PPDU to the moment at which the first device starts to send the third PPDU is denoted as duration that can be ensured by the second device below. It should be noted that the duration that can be ensured by the second device may also be understood as minimum duration that is capable of being ensured by the second device and that is from the moment at which the first device finishes receiving the first PPDU to the moment at which the first device starts to send the third PPDU. In other words, actual duration from the moment at which the first device finishes receiving the first PPDU to the moment at which the first device starts to send the third PPDU is greater than or equal to the duration that can be ensured by the second device.

After the second device receives the first information from the first device, and determines, based on the first information, the target feedback requirement corresponding to the target measurement configuration, the second device sends the first indication information to the first device based on the target feedback requirement.

For example, if the target feedback requirement includes the target required duration, and the second device can meet the target required duration, the first indication information sent by the second device to the first device indicates the first device to send the second PPDU in the immediate feedback mode, or indicates that the second device is capable of meeting the target feedback requirement. If the target feedback requirement includes the target required duration, and the second device cannot meet the target required duration, the first indication information sent by the second device to the first device indicates the first device to send the second PPDU in the delayed feedback mode, or indicates that the second device is not capable of meeting the target feedback requirement.

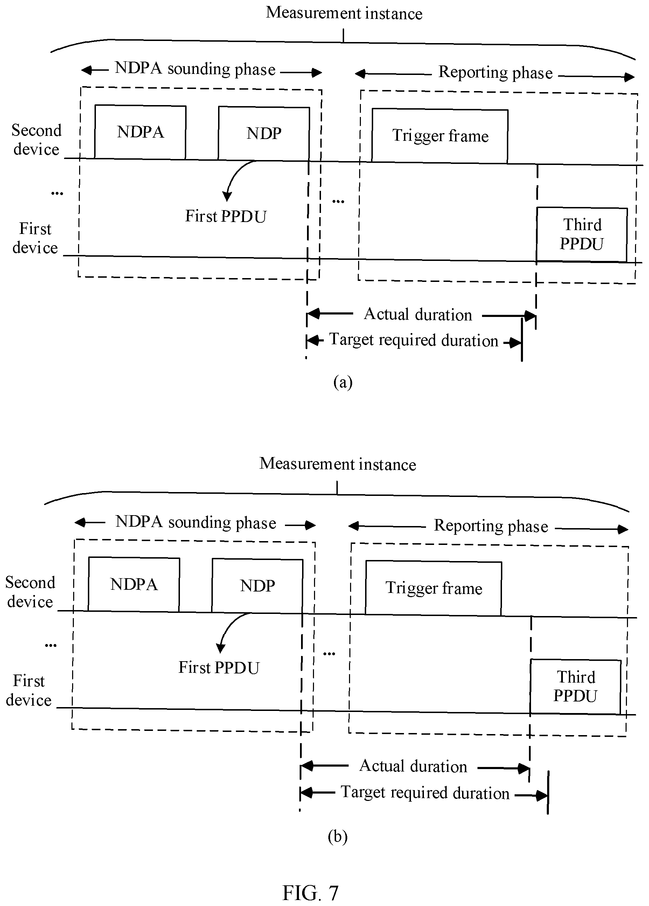

That the second device can meet the target required duration may mean that the second device can ensure that the duration from the moment at which the first device finishes receiving the first PPDU to the moment at which the first device starts to send the third PPDU is greater than or equal to the target required duration. (a) in FIG. 7 is an example in which the second device can meet the target required duration. In the example shown in (a) in FIG. 7, the duration from the moment at which the first device finishes receiving the first PPDU to the moment at which the first device starts to send the third PPDU is greater than the target required duration, that is, the second device can meet the target required duration. It may be understood that because the second device can meet the target required duration, after receiving an NDP (that is, the first PPDU) from the second device, the first device has sufficient time to measure the NDP and obtain the sensing measurement result. Therefore, after the first device receives the trigger frame from the second device, the third PPDU sent to the second device may include the sensing measurement result, that is, the third PPDU is equivalent to the second PPDU.

That the second device cannot meet the target required duration may mean that the second device cannot ensure that the duration from the moment at which the first device finishes receiving the first PPDU to the moment at which the first device starts to send the third PPDU is greater than or equal to the target required duration. (b) in FIG. 7 is an example in which the second device cannot meet the target required duration. In the example shown in (b) in FIG. 7, the duration from the moment at which the first device finishes receiving the first PPDU to the moment at which the first device starts to send the third PPDU is less than the target required duration, that is, the second device cannot meet the target required duration. It should be noted that, in the example shown in (b) in FIG. 7, because the duration from the moment at which the first device finishes receiving the first PPDU to the moment at which the first device starts to send the third PPDU is less than the target required duration, the first device has insufficient reaction and processing time. Consequently, the first device cannot obtain the sensing measurement result based on the first PPDU, or cannot obtain all the sensing measurement results based on the first PPDU. Therefore, the third PPDU sent by the first device to the second device does not include the sensing measurement result, or includes a part of sensing measurement results, that is, the third PPDU is different from the second PPDU.

It may be understood that, when the second device can meet the target required duration, the first indication information sent by the second device indicates the first device to send the second PPDU in the immediate feedback mode. Therefore, when the first indication information indicates the first device to send the second PPDU in the immediate feedback mode, it is equivalent to that the first indication information indicates that the duration that can be ensured by the second device is the target required duration.

For another example, if the target feedback requirement includes the target feedback mode, and the target feedback mode is the immediate feedback mode, the first indication information sent by the second device to the first device indicates the first device to send the second PPDU in the immediate feedback mode. If the target feedback requirement includes the target feedback mode, and the target feedback mode is the delayed feedback mode, the first indication information sent by the second device to the first device indicates the first device to send the second PPDU in the delayed feedback mode.

For another example, the first indication information sent by the second device to the first device indicates the duration that can be ensured by the second device. As described above, if the duration that can be ensured by the second device is greater than or equal to the target required duration, it indicates that the second device can meet the target required duration. Therefore, if the duration that can be ensured by the second device and that is indicated by the first indication information is greater than or equal to the target required duration, it is equivalent to that the first indication information further indicates the first device to send the second PPDU in the immediate feedback mode. If the duration that can be ensured by the second device is less than the target required duration, it indicates that the second device does not meet the target required duration. Therefore, if the duration that can be ensured by the second device and that is indicated by the first indication information is less than the target required duration, it is equivalent to that the first indication information further indicates the first device to send the second PPDU in the delayed feedback mode.

For another example, after the second device receives the first information, regardless of specific content of the target feedback requirement determined by the second device based on the first information, the second device may send the first indication information to the first device. The first indication information indicates at least one of the following: the feedback mode used by the first device to send the second PPDU, whether the second device can meet the target feedback requirement, and the duration that can be ensured by the second device. For example, even if the target feedback requirement includes the target required duration, and the second device can meet the target required duration, the first indication information sent by the second device to the first device indicates the first device to send the second PPDU in the delayed feedback mode. For another example, even if the target feedback requirement includes the target feedback mode, and the target feedback mode is the immediate feedback mode, the first indication information sent by the second device to the first device indicates the first device to send the second PPDU in the delayed feedback mode.

For example, the second device sends the first indication information to the first device in the sensing measurement setup procedure. For example, the second device sends the sensing measurement setup request information to the first device, where the sensing measurement setup request information includes the first indication information.

Optionally, the sensing measurement setup request information further includes the target measurement configuration, or the sensing measurement setup request information includes a part of sensing measurement parameters in the target measurement configuration.

Optionally, the method 600 further includes S630.

S630: The first device sends fourth indication information to the second device.

Correspondingly, the second device receives the fourth indication information from the first device.

After receiving the first indication information from the second device, the first device sends the fourth indication information to the second device based on the first indication information. The fourth indication information indicates at least one of the following: indicates that the first device is to send the second PPDU in the immediate feedback mode, or indicates that the first device is to send the second PPDU in the delayed feedback mode, or indicates that the first device is to send the second PPDU when the target required duration is met.

For example, if the first indication information indicates the first device to send the second PPDU in the immediate feedback mode, the fourth indication information sent by the first device to the second device indicates that the first device is to send the second PPDU in the immediate feedback mode.

For example, if the first indication information indicates the first device to send the second PPDU in the delayed feedback mode, the fourth indication information sent by the first device to the second device indicates that the first device is to send the second PPDU in the delayed feedback mode.

For example, if the first indication information indicates the duration that can be ensured by the second device, and the duration that can be ensured by the second device is greater than or equal to the target required duration, the fourth indication information sent by the first device to the second device indicates at least one of the following: indicates that the first device is to send the second PPDU in the immediate feedback mode, or indicates that the first device is to send the second PPDU when the target required duration is met.

For example, if the first indication information indicates the duration that can be ensured by the second device, and the duration that can be ensured by the second device is less than the target required duration, the fourth indication information sent by the first device to the second device indicates at least one of the following: indicates that the first device is to send the second PPDU in the delayed feedback mode, or indicates that the first device is to send the second PPDU when the target required duration is met.

In a possible implementation, if the first device does not receive the first indication information from the second device, after receiving the target measurement configuration from the second device, the first device sends the fourth indication information to the second device based on the target measurement configuration. For example, if the first device determines that the target feedback requirement corresponding to the target measurement configuration includes the target feedback mode, and the target feedback mode is the immediate feedback mode, the fourth indication information sent by the first device to the second device indicates that the first device is to send the second PPDU in the immediate feedback mode. For another example, if the first device determines that the target feedback requirement corresponding to the target measurement configuration includes the target feedback mode, and the target feedback mode is the delayed feedback mode, the fourth indication information sent by the first device to the second device indicates that the first device is to send the second PPDU in the delayed feedback mode. For another example, if the first device determines that the target feedback requirement corresponding to the target measurement configuration includes the target required duration, the fourth indication information sent by the first device to the second device indicates that the first device is to send the second PPDU when the target required duration is met.

For example, the first device sends the fourth indication information to the second device in the sensing measurement setup procedure. For example, the first device sends sensing measurement setup response (sensing measurement setup response) information to the second device, where the sensing measurement setup response information includes the fourth indication information.

S640: The second device sends the first PPDU to the first device.

Correspondingly, the first device receives the first PPDU from the second device.

After receiving the first PPDU from the second device, the first device obtains the sensing measurement result by measuring the first PPDU. Further, if the first device receives the trigger frame from the second device, and the trigger frame is used to trigger the first device to feed back the sensing measurement result, the first device sends the second PPDU to the second device.

For example, the feedback mode used by the first device to send the second PPDU to the second device is the immediate feedback mode. As described above, if the second device can meet the target required duration, in other words, the duration from the moment at which the first device finishes receiving the first PPDU to the moment at which the first device starts to send the third PPDU is greater than or equal to the target required duration, the first device sends the second PPDU in the immediate feedback mode. It may be understood that when the duration from the moment at which the first device finishes receiving the first PPDU to the moment at which the first device starts to send the third PPDU is greater than or equal to the target required duration, the third PPDU is equivalent to the second PPDU.

For example, the feedback mode used by the first device to send the second PPDU to the second device is the delayed feedback mode. As described above, if the second device cannot meet the target required duration, in other words, the duration from the moment at which the first device finishes receiving the first PPDU to the moment at which the first device starts to send the third PPDU is less than the target required duration, the first device sends the second PPDU in the delayed feedback mode. In other words, because the second device cannot meet the target required duration, the first device has the insufficient processing and reaction time. Therefore, at the moment at which the first device starts to send the third PPDU, the first device has not obtained the sensing measurement result based on the first PPDU, or the first device is not ready to feed back the sensing measurement result obtained based on the first PPDU to the second device. In this case, the third PPDU sent by the first device to the second device does not include the sensing measurement result, or includes the part of sensing measurement results. Further, in the second measurement instance after the first measurement instance, the first device feeds back, to the second device, the sensing measurement result obtained based on the first PPDU, to be specific, the first device sends the second PPDU to the second device in the delayed feedback mode.

Optionally, the second PPDU further includes one or more of the following: second indication information, an identifier of first sensing measurement setup corresponding to the sensing measurement result, and an identifier of the first measurement instance corresponding to the sensing measurement result. The second indication information indicates that the feedback mode used by the first device to send the second PPDU is the immediate feedback mode or the delayed feedback mode.

For example, if the first device sends the second PPDU in the immediate feedback mode, the second PPDU may include the second indication information, and the second indication information indicates that the feedback mode used by the first device to send the second PPDU is the immediate feedback mode. For example, the second indication information is 1-bit information. If a value of the second indication information is "1", the second indication information indicates that the feedback mode used by the first device to send the second PPDU is the immediate feedback mode. Alternatively, if a value of the second indication information is "0", the second indication information indicates that the feedback mode used by the first device to send the second PPDU is the immediate feedback mode.

Correspondingly, after receiving the second PPDU, the second device determines, based on the second indication information included in the second PPDU, that the feedback mode used by the first device to send the second PPDU is the immediate feedback mode.

For example, if the first device sends the second PPDU in the delayed feedback mode, the second PPDU may include the second indication information, and the second indication information indicates that the feedback mode used by the first device to send the second PPDU is the delayed feedback mode. For example, the second indication information is 1-bit information. If a value of the second indication information is "0", the second indication information indicates that the feedback mode used by the first device to send the second PPDU is the delayed feedback mode. Alternatively, if a value of the second indication information is "1", the second indication information indicates that the feedback mode used by the first device to send the second PPDU is the delayed feedback mode.

Correspondingly, after receiving the second PPDU, the second device determines, based on the second indication information included in the second PPDU, that the feedback mode used by the first device to send the second PPDU is the delayed feedback mode.

For example, the second PPDU may include the identifier of first sensing measurement setup corresponding to the sensing measurement result.

Correspondingly, after the second device receives the second PPDU, if the identifier that is of first sensing measurement setup and that is included in the second PPDU is different from an identifier of sensing measurement setup corresponding to a current measurement instance, the second device determines that the feedback mode used by the first device to send the second PPDU is the delayed feedback mode. The current measurement instance is a measurement instance in which the second device receives the second PPDU.

For example, the second PPDU may include the identifier of the first measurement instance corresponding to the sensing measurement result.

Correspondingly, after the second device receives the second PPDU, if the identifier that is of the first measurement instance and that is included in the second PPDU is different from an identifier of the current measurement instance, the second device determines that the feedback mode used by the first device to send the second PPDU is the delayed feedback mode. If the identifier that is of the first measurement instance and that is included in the second PPDU is the same as the identifier of the current measurement instance, the second device determines that the feedback mode used by the first device to send the second PPDU is the immediate feedback mode. The current measurement instance is a measurement instance in which the second device receives the second PPDU.

In this embodiment of this application, the second device may determine, based on the first information, the target feedback requirement corresponding to the target measurement configuration. In this way, it may be determined whether the second device meets the target feedback requirement. This helps improve feedback efficiency. For example, if the target feedback requirement includes the target required duration, and the second device can meet the target required duration, it indicates that the first device has the sufficient processing and reaction time. Therefore, the first device may report the sensing measurement result in the immediate feedback mode. This can improve feedback efficiency.

The following describes a design of the first information.

The first information indicates a sensing measurement result feedback requirement corresponding to each of N different measurement configurations. A sensing measurement result feedback requirement corresponding to an $n^{th}$ measurement configuration in the N different measurement configurations includes at least one of the following: required duration from a moment at which the first device finishes receiving the first PPDU by using the $n^{th}$ measurement configuration to a moment at which the first device starts to send the second PPDU by using the $n^{th}$ measurement configuration, or a feedback mode used by the first device to send the second PPDU by using the $n^{th}$ measurement configuration, where the feedback mode includes the immediate feedback mode or the delayed feedback mode, and n=1, 2, ..., or N. For more descriptions of the sensing measurement result feedback requirement corresponding to the $n^{th}$ measurement configuration, refer to the foregoing descriptions of the target feedback requirement in S610.

Each of the N measurement configurations includes one or more of the following sensing measurement parameters: a number of transmit antennas, a number of receive antennas, a subcarrier grouping size, a quantization bit value of each real part or imaginary part corresponding to the CSI, or a bandwidth. Any two different measurement configurations in the N measurement configurations have at least one parameter with a different value. It should be noted that the parameter and the sensing measurement parameter in the following embodiments may be replaced with each other.

Each of the N different measurement configurations is determined based on one or more of the following: a value of the number of transmit antennas, a value of the number of receive antennas, a value of the subcarrier grouping size, a value of the quantization bit value, or a value of the bandwidth. For example, the N different measurement configurations determined based on one or more of the foregoing items meet the following features: All of the N measurement configurations include a same parameter item, and any two of the N measurement configurations have at least one parameter item with a different value. For example, if each of the N measurement configurations includes the number of transmit antennas, the number of receive antennas, and the bandwidth, a value of a number of transmit antennas included in a measurement configuration #1 in the N measurement configurations is 1, a value of a number of receive antennas included in the measurement configuration #1 is 1, a value of a number of transmit antennas included in a measurement configuration #2 in the N measurement configurations is 1, and a value of a number of receive antennas included in the measurement configuration #2 is 1, a value of a bandwidth included in the measurement configuration #1 is definitely different from a value of a bandwidth included in the measurement configuration #2.

It can be learned from the foregoing that a value of N is related to a number of parameter items included in each measurement configuration and a number of values of each parameter. Specifically, the value of N is equal to a product of the numbers of values of all parameters. For example, each measurement configuration includes the foregoing five parameters, and if a number of values of the number of transmit antennas is t, a number of values of the number of receive antennas is r, a number of values of the subcarrier grouping size is g, a number of values of the quantization bit value is b, and a number of values of the bandwidth is w, $N=t\times r\times g\times b\times w$, where t, r, g, b, and w are all positive integers.

For example, the value of the number of transmit antennas is one or more of 1 to 8, that is, $1\leq t\leq 8$; and the value of the number of receive antennas is one or more of 1 to 8, that is, $1\leq r\leq 8$. If the value of the number of transmit antennas is less than or equal to 4, or the value of the number of transmit antennas is greater than or equal to 5, and the value of the bandwidth is less than or equal to 80 MHz, the value of the subcarrier grouping size is 4 or 16. If the value of the number of transmit antennas is greater than or equal to 5, and the value of the bandwidth is equal to 160 MHz, the value of the subcarrier grouping size is 8 or 16. It can be learned that $1\leq g\leq 2$. The value of the quantization bit value is 8 or 10, that is, $1\leq b\leq 2$. The value of the bandwidth is one or more of 20 MHz, 40 MHz, 80 MHz, or 160 MHz, or the value of the bandwidth is one or more of 20 MHz, 40 MHz, 80 MHz, 160 MHz, or 320 MHz, that is, $1\leq b\leq 4$, or $1\leq b\leq 5$.

The sensing measurement result feedback requirement corresponding to each of the N different measurement configurations is any one of requirements in the following Table 1 or any one of requirements in the following Table 2. It should be noted that Table 1 and Table 2 are merely used as examples, and should not constitute a limitation on embodiments of this application. The sensing measurement result feedback requirement corresponding to each of the N different measurement configurations may alternatively be in another form.

Table 1

| Index value | Descriptions of the sensing measurement result feedback requirement |
|---|---|
| 0 | Immediate feedback (no time limit for the feedback requirement) |
| 1 | 64 μs (feedback can be performed only when the time is reached) |
| 2 | 80 μs (feedback can be performed only when the time is reached) |
| 3 | 96 μs (feedback can be performed only when the time is reached) |
| 4 | 112 μs (feedback can be performed only when the time is reached) |
| 5 | 128 μs (feedback can be performed only when the time is reached) |
| 6 | Reserved (reserved) |
| 7 | Delayed feedback |

Table 2

| Index value | Descriptions of the sensing measurement result feedback requirement |
|---|---|
| 0 | 64 μs (feedback can be performed only when the time is reached) |
| 1 | 80 μs (feedback can be performed only when the time is reached) |
| 2 | 96 μs (feedback can be performed only when the time is reached) |

(continued)

| Index value | Descriptions of the sensing measurement result feedback requirement |
|---|---|
| 3 | 112 $\mu$s (feedback can be performed only when the time is reached) |
| 4 | 128 $\mu$s (feedback can be performed only when the time is reached) |
| 5 | reserved |
| 6 | reserved |
| 7 | reserved |

The descriptions of the sensing measurement result feedback requirements shown in Table 1 and Table 2 may be understood as follows:

For the mode "immediate feedback (no time limit for the feedback requirement)" shown in Table 1, it indicates that the first device does not care about the duration from the moment at which the first device finishes receiving the first PPDU to the moment at which the first device starts to send the second PPDU. In other words, after the first device receives the first PPDU from the second device, the first device may immediately perform feedback provided that the first device receives the trigger frame from the second device, to be specific, the first device sends the second PPDU to the second device.

For the mode "feedback can be performed only when xx $\mu$s is reached" shown in Table 1 and Table 2, it indicates that the first device can send a PPDU to the second device only when the duration from the moment at which the first device finishes receiving the first PPDU to the moment at which the first device starts to send the second PPDU reaches xx $\mu$s. That the duration from the moment at which the first device finishes receiving the first PPDU to the moment at which the first device starts to send the second PPDU reaches xx $\mu$s may mean that the duration from the moment at which the first device finishes receiving the first PPDU to the moment at which the first device starts to send the second PPDU is greater than xx $\mu$s or equal to xx $\mu$s.

The mode "delayed feedback" shown in Table 1 indicates that the first device receives the first PPDU in the first measurement instance, and sends the second PPDU in the second measurement instance, where the occurrence time of the second measurement instance is later than the occurrence time of the first measurement instance. Alternatively, the mode "delayed feedback" indicates that the first device can send the second PPDU in the delayed feedback mode when the duration from the moment at which the first device finishes receiving the first PPDU to the moment at which the first device starts to send the second PPDU reaches the preset duration.

A relationship between the mode "delayed feedback" and the mode "feedback can be performed only when xx $\mu$s is reached" can be understood as one of the following:

(1) The mode "delayed feedback" and the mode "feedback can be performed only when xx $\mu$s is reached" are independent of each other.

To be specific, "delayed feedback" indicates that the first device sends the second PPDU in the second measurement instance different from the first measurement instance, and "feedback can be performed only when xx $\mu$s is reached" indicates that the first device can send the second PPDU only when the duration from the moment at which the first device finishes receiving the first PPDU to the moment at which the first device starts to send the second PPDU reaches xx $\mu$s. The first device may support the mode "feedback can be performed only when xx $\mu$s is reached", but does not support the mode "delayed feedback". For example, it is assumed that "delayed feedback" implicitly indicates that the first device can send the second PPDU when the duration from the moment at which the first device finishes receiving the first PPDU to the moment at which the first device starts to send the second PPDU reaches 100 $\mu$s. In this case, when a measurement result feedback requirement selected by the first device is "feedback can be performed only when 64 $\mu$s is reached", the first device definitely supports "delayed feedback"; or when a measurement result feedback requirement selected by the first device is "feedback can be performed only when 128 $\mu$s is reached", the first device does not support "delayed feedback".

(2) "Delayed feedback" is the worst case of "feedback can be performed only when xx $\mu$s is reached".

In other words, a value of "xx $\mu$s" is less than a minimum time requirement corresponding to the mode "delayed feedback". For example, it is assumed that "delayed feedback" implicitly indicates that the first device can send the second PPDU when the duration from the moment at which the first device finishes receiving the first PPDU to the moment at which the first device starts to send the second PPDU reaches 100 $\mu$s. In this case, the value of "xx $\mu$s" is less than 100 $\mu$s. Further, a feedback requirement that can be selected by the first device may include "feedback can be performed only when 64 $\mu$s is reached", and does not include "feedback can be performed only when 112 $\mu$s is reached" and "feedback can be performed only when 128 $\mu$s is reached".

It can be learned from the foregoing that, when a plurality of different sensing measurement result feedback requirements corresponding to the first device are configured, it may be considered whether the first device needs to support at least "delayed feedback". If the first device needs to support at least "delayed feedback", for the sensing measurement result feedback requirement "feedback can be performed only when xx μs is reached" corresponding to the first device, the value of "xx μs" is less than the minimum time requirement corresponding to the mode "delayed feedback". If the first device does not need to support at least "delayed feedback", for the sensing measurement result feedback requirement "feedback can be performed only when xx μs is reached" corresponding to the first device, the value of "xx μs" may be greater than or equal to the minimum time requirement corresponding to the mode "delayed feedback".

For example, the first information indicates a correspondence between the N different measurement configurations and the different sensing measurement result feedback requirements. For example, the first information indicates one-to-one correspondences between the N different measurement configurations and the different sensing measurement result feedback requirements, as shown in Table 3. Alternatively, the first information indicates many-to-one correspondences between the N different measurement configurations and the different sensing measurement result feedback requirements, as shown in Table 4, where M is a positive integer.

Table 3

| Measurement configuration | Feedback requirement |
|---|---|
| Measurement configuration #1 | Sensing measurement result feedback requirement corresponding to the measurement configuration #1 |
| Measurement configuration #2 | Sensing measurement result feedback requirement corresponding to the measurement configuration #2 |
| ... | ... |
| Measurement configuration #N | Sensing measurement result feedback requirement corresponding to the measurement configuration #N |

Table 4

| Measurement configuration | Sensing measurement result feedback requirement |
|---|---|
| One or more measurement configurations corresponding to a sensing measurement result feedback requirement #1 | Sensing measurement result feedback requirement #1 |
| One or more measurement configurations corresponding to a sensing measurement result feedback requirement #2 | Sensing measurement result feedback requirement #2 |
| ... | ... |
| One or more measurement configurations corresponding to a sensing measurement result feedback requirement #M | Sensing measurement result feedback requirement #M |

For example, $\lceil \log_2 N \rceil$ bits (bits) may indicate the N different measurement configurations, where $\lceil \ \rceil$ represents rounding up. If the sensing measurement result feedback requirement corresponding to each of the N different measurement configurations is any one of Table 1 or Table 2, 3 bits may indicate the different sensing measurement result feedback requirements. It should be noted that a number of bits indicating the N different measurement configurations is not limited in embodiments of this application. For example, ( $\lceil \log_2 N \rceil + a$ ) bits may alternatively indicate the N different measurement configurations, where a is a positive integer.

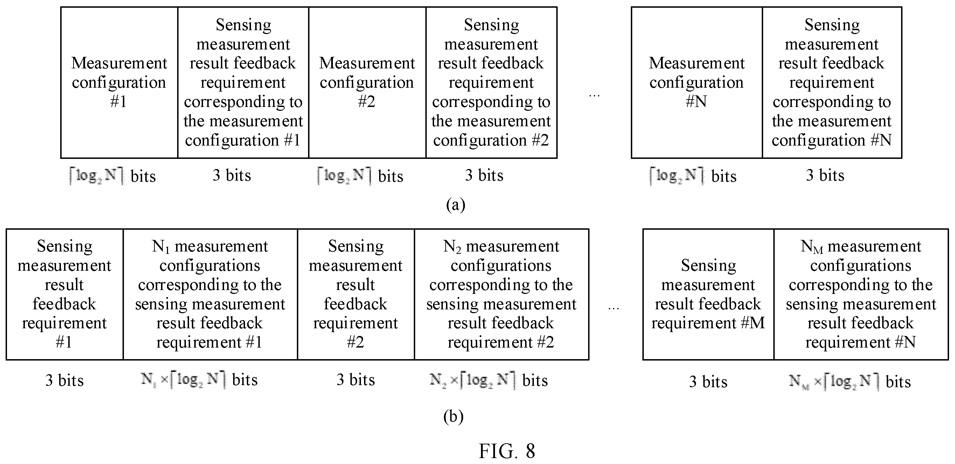

If the first information indicates the one-to-one correspondences between the N different measurement configurations and the different sensing measurement result feedback requirements, an example of a format of the first information is shown in (a) in FIG. 8. As shown in (a) in FIG. 8, the first $\lceil \log_2 N \rceil$ bits included in the first information indicate a measurement configuration #1, and a $(\lceil \log_2 N \rceil + 1)^{th}$ bit to a $(\lceil \log_2 N \rceil + 3)^{th}$ bit indicate a sensing measurement result feedback requirement corresponding to the measurement configuration #1; a $(\lceil \log_2 N \rceil + 4)^{th}$ bit to a $(2 \times \lceil \log_2 N \rceil + 3)^{th}$ bit indicate a measurement configuration #2, and a $(2 \times \lceil \log_2 N \rceil + 4)^{th}$ bit to a (2×

$\lceil \log_2 N \rceil + 6)^{th}$ bit indicate a sensing measurement result feedback requirement corresponding to the measurement configuration #2; ...; and an $[(N-1)\times(\lceil \log_2 N \rceil + 3)+1]^{th}$ bit to an $[(N-1)\times(\lceil \log_2 N \rceil + 3)+\lceil \log_2 N \rceil]^{th}$ bit indicate a measurement configuration #N, and an $[N\times(\lceil \log_2 N \rceil + 3)-2]^{th}$ bit to an $[N\times(\lceil \log_2 N \rceil + 3)]^{th}$ bit indicate a sensing measurement result feedback requirement corresponding to the measurement configuration #N.

If the first information indicates the many-to-one correspondences between the N different measurement configurations and the different sensing measurement result feedback requirements, an example of a format of the first information is shown in (b) in FIG. 8, where $N_1$, $N_2$, and $N_M$ are all positive integers, and M=5 or M=6. As shown in (a) in FIG. 8, the first 3 bits included in the first information indicate a sensing measurement result feedback requirement #1, and a $4^{th}$ bit to an $(N_1\times\lceil \log_2 N \rceil + 3)^{th}$ bit indicate $N_1$ measurement configurations corresponding to the sensing measurement result feedback requirement #1; an $(N_1\times\lceil \log_2 N \rceil + 4)^{th}$ bit to an $(N_1\times\lceil \log_2 N \rceil + 6)^{th}$ bit indicate a sensing measurement result feedback requirement #2, and an $(N_1\times\lceil \log_2 N \rceil + 7)^{th}$ bit to an $[(N_1+N_2)\times\lceil \log_2 N \rceil + 6)]^{th}$ bit indicate $N_2$ measurement configurations corresponding to the sensing measurement result feedback requirement #2; ...; and an $[(N-N_M)\times\lceil \log_2 N \rceil + 3M-2]^{th}$ bit to an $[(N-N_M)\times\lceil \log_2 N \rceil + 3M]^{th}$ bit indicate a sensing measurement result feedback requirement #N, and an $[(N-N_M)\times\lceil \log_2 N \rceil + 3M+1]^{th}$ bit to an $[N\times(\lceil \log_2 N \rceil + 3M]^{th}$ bit indicate $N_M$ measurement configurations corresponding to the sensing measurement result feedback requirement #M.

For example, the first information indicates N sensing measurement result feedback requirements, and the N sensing measurement result feedback requirements one-to-one correspond to the N measurement configurations arranged in a predefined order. For example, when each of the N measurement configurations includes the foregoing five parameters, and values of each parameter include all possible values, correspondences between the N feedback requirements indicated by the first information and the N measurement configurations are shown in Table 5. The first information shown in Table 5 indicates each of the different sensing measurement result feedback requirements by using 3 bits.

Table 5

| | BW= case1 $N_b$= case1 $N_g$= case1 $N_{TX}$=1 | BW= case1 $N_b$= case1 $N_g$= case1 $N_{TX}$=1 | ... | BW= case1 $N_b$= case1 $N_g$= case1 $N_{TX}$=1 | BW= case1 $N_b$= case1 $N_g$= case1 $N_{TX}$=2 | ... | BW= case1 $N_b$= case1 $N_g$= case1 $N_{TX}$=2 | BW= case4 $N_b$= case2 $N_g$= case2 $N_{TX}$=8 | ... |
|---|---|---|---|---|---|---|---|---|---|
| | $N_{RX}$=1 | $N_{RX}$=2 | | $N_{RX}$=8 | $N_{RX}$=1 | | $N_{RX}$=8 | $N_{RX}$=8 | |
| ... | 3 bits | 3 bits | ... | 3 bits | 3 bits | ... | 3 bits | 3 bits | ... |

When four possible values (20 MHz, 40 MHz, 80 MHz, and 160 MHz) of the bandwidth are arranged in ascending order, "BW=case1" indicates that the value of the bandwidth is the first possible value, in other words, the value of the bandwidth is 20 MHz, and "BW=case4" indicates that the value of the bandwidth is the fourth possible value, in other words, the value of the bandwidth is 160 MHz. When two possible values (8 and 10) of the quantization bit value are arranged in ascending order, "$N_b$=case1" indicates that the value of the quantization bit value is the first possible value, in other words, the value of the quantization bit value is 8, and "$N_b$=case2" indicates that the value of the quantization bit value is the second possible value, in other words, the value of the quantization bit value is 10. When two possible values (4 or 8, and 16) of the subcarrier grouping size are arranged in ascending order, "$N_g$=case1" indicates that the value of the subcarrier grouping size is the first possible value, in other words, the value of the subcarrier grouping size is 4 or 8, and "$N_g$=case2" indicates that the value of the subcarrier grouping size is the second possible value, in other words, the value of the subcarrier grouping size is 16. "$N_{TX}$=1" indicates that the value of the number of transmit antennas is 1, "$N_{TX}$=2" indicates that the value of the number of transmit antennas is 2, and "$N_{TX}$=8" indicates that the value of the number of transmit antennas is 8. "$N_{RX}$=1" indicates that the value of the number of receive antennas is 1, "$N_{RX}$=2" indicates that the value of the number of receive antennas is 2, and "$N_{RX}$=8" indicates that the value of the number of receive antennas is 8.

It should be noted that Table 5 is merely an example of the first information. This is not limited in embodiments of this application. For example, the N different measurement configurations may be sorted in descending order of values of parameters. For another example, when the N different measurement configurations are sorted, values of numbers of transmit antennas may be changed first, and then values of numbers of receive antennas, values of bandwidths, values of quantization bit values, and values of subcarrier grouping sizes are sequentially changed.

It should be further noted that, in Table 5, an example in which a value of each parameter may be all possible values is used. This is not limited in embodiments of this application. For example, in specific implementation, the first device may not support some values. For example, if the first device supports a maximum of four transmit antennas, a possible value of the number of transmit antennas includes 1 to 4, in other words, the value of the number of transmit antennas included in each of the N different measurement configurations is one of 1 to 4. For another example, impact of a part of parameters on the feedback requirement may not be considered, so that values of parameters included in all the N different measurement configurations are the same. For example, impact of different values of the quantization bit value on the sensing measurement result feedback requirement may not be considered, so that the value of the quantization bit value included in each of the N different measurement configurations is 10. For example, impact of different values of the subcarrier grouping size on the sensing measurement result feedback requirement may not be considered, so that the value of the subcarrier grouping size included in each of the N different measurement configurations is 16.

It should be further noted that, in Table 5, an example in which each measurement configuration includes five parameters is used. This is not limited in embodiments of this application. For example, each of the N different measurement configurations may further include more or fewer parameters. For example, each measurement configuration may further include a number of spatial streams. It should be further noted that the parameter shown in Table 5 may be replaced with another parameter. For example, the number of transmit antennas may be replaced with the number of spatial streams.

With reference to Table 5, the foregoing shows an example of the first information in a case in which parameters included in a measurement configuration and all possible values of each parameter are enumerated. Certainly, in a specific implementation process, values of one or more parameters used to determine the N different measurement configurations may not include all possible values.

Optionally, the first information further indicates one or more of the following: t values of the number of transmit antennas, r values of the number of receive antennas, g values of the subcarrier grouping size, b values of the quantization bit value, or w values of the bandwidth.

For example, the first information indicates the t values of the number of transmit antennas in the following manner:

In a possible manner, the first information indicates at least one of the following: The first information indicates a largest value in the t values or the first information indicates a smallest value in the t values. If the first information indicates the largest value in the t values, the t values of the number of transmit antennas may include the largest value indicated by the first information, the smallest value in all possible values of the number of transmit antennas, and a value between the smallest value in all the possible values of the number of transmit antennas and the largest value indicated by the first information. For example, if the largest value, indicated by the first information, of the t values is 4, the t values of the number of transmit antennas include 1 to 4. If the first information indicates the smallest value in the t values, the t values of the number of transmit antennas may include the smallest value indicated by the first information, the largest value in all possible values of the number of transmit antennas, and a value between the smallest value indicated by the first information and the largest value in all the possible values of the number of transmit antennas. For example, if the smallest value, indicated by the first information, of the t values is 2, the t values of the number of transmit antennas include 2 to 8. If the first information indicates the largest value and the smallest value in the t values, the t values of the number of transmit antennas include the largest value and the smallest value that are indicated by the first information, and a value between the smallest value and the largest value that are indicated by the first information. As described above, the value of the number of transmit antennas is one or more of 1 to 8. Therefore, 3 bits may indicate the largest value in the number of transmit antennas, and 3 bits may indicate the smallest value in the number of transmit antennas.

In a possible manner, the first information further includes T bits, the T bits one-to-one correspond to T possible values of the number of transmit antennas, each of the T bits indicates whether the t values include a value corresponding to the bit, and T is a positive integer. For example, if a value of a bit #T' in the T bits is a first value, the bit #T' indicates that the t values include the value corresponding to the bit #T'; or if a value of a bit #T' is a second value, the bit #T' indicates that the t values do not include the value corresponding to the bit #T'. The bit #T' is a $T'^{th}$ bit in the T bits, and T'=1, 2, ..., or T. The first value is 1, and the second value is 0; or the first value is 0, and the second value is 1. Because the possible value of the number of transmit antennas is one or more of 1 to 8, $1 \le T \le 8$. For example, a value of T is always equal to 8, and 8 bits one-to-one correspond to values 1 to 8. For another example, a value of T is determined by a maximum number of transmit antennas supported by the first device. For example, if the first device supports a maximum of six transmit antennas, the value of T is equal to 6, and 6 bits one-to-one correspond to values 1 to 6. It is assumed that T=8, the first value is 1, and the second value is 0. In this case, when the T bits included in the first information is "11110000", the t values that are used by the first information to indicate the number of transmit antennas include 1 to 4.

For example, the first information indicates the r values of the number of receive antennas in the following manner:

In a possible manner, the first information indicates at least one of the following: The first information indicates a largest value in the r values or the first information indicates a smallest value in the r values.

In a possible manner, the first information further includes R bits, the R bits one-to-one correspond to R possible values of the number of receive antennas, each of the R bits indicates whether the r values include a value corresponding to the bit, and R is a positive integer. For example, if a value of a bit #R' in the R bits is a first value, the bit #R' indicates that the r values include the value corresponding to the bit #R'; or if a value of a bit #R' is a second value, the bit #R' indicates that the r values do not include the value corresponding to the bit #R'. The bit #R' is an R'th bit in the R bits, and R'=1, 2, ..., or R. Similar to the value of T, $1 \le R \le 8$.

For descriptions of a manner in which the first information indicates the r values of the number of receive antennas, refer to the foregoing descriptions of the manner in which the first information indicates the t values of the number of transmit antennas.

For example, the first information indicates the g values of the subcarrier grouping size in the following manner:

In a possible manner, the first information indicates at least one of the following: The first information indicates a largest value in the g values or the first information indicates a smallest value in the g values.

In a possible manner, the first information further includes G bits, the G bits one-to-one correspond to G possible values of the subcarrier grouping size, each of the G bits indicates whether the g values include a value corresponding to the bit, and G is a positive integer. For example, if a value of a bit #G' in the G bits is a first value, the bit #G' indicates that the g values include the value corresponding to the bit #G'; or if a value of a bit #G' is a second value, the bit #G' indicates that the g values do not include the value corresponding to the bit #G'. The bit #G' is a G'th bit in the G bits, and G'=1, 2, ..., or G.

Because a possible value of the subcarrier grouping size is 4, 8, or 16, $1 \le G \le 2$. For example, a value of G is always equal to 2, one of 2 bits corresponds to a value 4 or 8, and the other bit corresponds to a value 16. For another example, if the g values always include 4 or 8 by default, a value of G is equal to 1, and 1 bit corresponds to a value 16, and indicates whether the r values include the value 16.

For descriptions of a manner in which the first information indicates the g values of the subcarrier grouping size, refer to the foregoing descriptions of the manner in which the first information indicates the t values of the number of transmit antennas.

For example, the first information indicates the b values of the quantization bit value in the following manner:

In a possible manner, the first information indicates at least one of the following: The first information indicates a largest value in the b values or the first information indicates a smallest value in the b values.

In a possible manner, the first information further includes B bits, the B bits one-to-one correspond to B possible values of the quantization bit value, each of the B bits indicates whether the b values include a value corresponding to the bit, and B is a positive integer. For example, if a value of a bit #B' in the B bits is a first value, the bit #B' indicates that the b values include the value corresponding to the bit #B'; or if a value of a bit #B' is a second value, the bit #B' indicates that the b values do not include the value corresponding to the bit #B'. The bit #B' is a B'th bit in the B bits, and B'=1, 2, ..., or B.

Because a possible value of the quantization bit value is 8 or 10, $1 \le B \le 2$. For example, a value of B is always equal to 2, one of 2 bits corresponds to a value 8, and the other bit corresponds to a value 10. For another example, if the b values always include 10 by default, a value of B is equal to 1, and 1 bit corresponds to a value 8, and indicates whether the b values include the value 8.

For descriptions of a manner in which the first information indicates the b values of the quantization bit value, refer to the foregoing descriptions of the manner in which the first information indicates the t values of the number of transmit antennas.

For example, the first information indicates the w values of the bandwidth in the following manner:

In a possible manner, the first information indicates at least one of the following: The first information indicates a largest value in the w values or the first information indicates a smallest value in the w values.

In a possible manner, the first information includes W bits, the W bits one-to-one correspond to W possible values of the bandwidth, each of the W bits indicates whether the w values include a value corresponding to the bit, and W is a positive integer. For example, if a value of a bit #W' in the W bits is a first value, the bit #W' indicates that the w values include the value corresponding to the bit #W'; or if a value of a bit #W' is a second value, the bit #W' indicates that the w values do not include the value corresponding to the bit #W'. The bit #W' is a W'th bit in the W bits, and W'=1, 2, ..., or W. Because a possible value of the bandwidth is one or more of 20 MHz, 40 MHz, 80 MHz, or 160 MHz, or a possible value of the bandwidth is one or more of 20 MHz, 40 MHz, 80 MHz, 160 MHz, or 320 MHz, $1 \le W \le 4$, or $1 \le W \le 5$.

For descriptions of a manner in which the first information indicates the w values of the bandwidth, refer to the foregoing descriptions of the manner in which the first information indicates the t values of the number of transmit antennas.

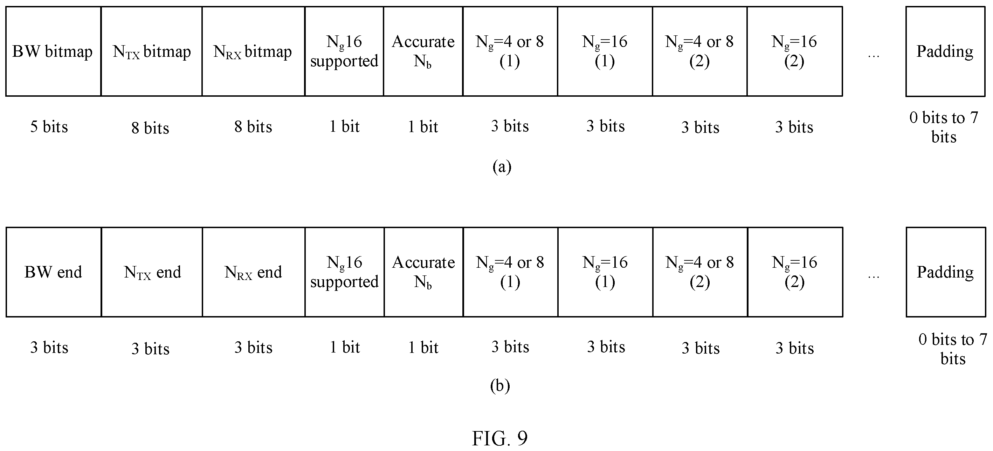

The first information indicates a plurality of the following items: the t values of the number of transmit antennas, the r values of the number of receive antennas, the g values of the subcarrier grouping size, the b values of the quantization bit value, or the w values of the bandwidth. An example of a structure of the first information is shown in (a) in FIG. 9. A BW bitmap (BW bitmap) field includes 5 bits indicating the w values of the bandwidth. An $N_{TX}$ bitmap ($N_{TX}$ bitmap) field includes 8 bits, indicating the t values of the number of transmit antennas. An $N_{RX}$ bitmap ($N_{RX}$ bitmap) field includes 8 bits, indicating the r values of the number of transmit antennas. An $N_g$ 16 supported ($N_g$ supported) field includes 1 bit, and the 1 bit indicates whether the g values of the subcarrier grouping size include a value 16. An accurate $N_b$ (accurate $N_b$) field includes 1 bit, and the 1 bit indicates whether the b values of the quantization bit value include a value 8. $N_g$=4 or 8 (1), $N_g$=16 (1), $N_g$=4 or 8 (2), and $N_g$=16 (2) indicate sensing measurement result feedback requirements indicated by the first information. A sensing measurement result feedback requirement indicated by the $N_g$=4 or 8 (1) field corresponds to a measurement configuration #a, and a value of a subcarrier grouping size included in the measurement configuration #a is 4 or 8. A sensing measurement result feedback requirement indicated by the $N_g$=16 (1) field corresponds to a measurement configuration #b, and a value of a subcarrier grouping size included in the measurement configuration #b is 16. Values of remaining parameters included in the measurement configuration #a and the measurement configuration #b are the same except that the values of the subcarrier grouping sizes are different. A sensing measurement result feedback requirement indicated by the $N_g$=4 or 8 (2) field corresponds to a measurement configuration #c, and a value of a subcarrier grouping size included in the measurement configuration #c is 4 or 8. A sensing measurement result feedback requirement indicated by the $N_g$=16 (2) field corresponds to a measurement configuration #d, and a value of a subcarrier grouping size included in the measurement configuration #d is 16. Values of remaining parameter items included in the measurement configuration #c and the measurement configuration #d are the same except that the values of the subcarrier grouping sizes are different. The measurement configuration #a and the measurement configuration #c have at least one parameter whose value is different. For example, a value of a bandwidth included in the measurement configuration #a is different from a value of a bandwidth included in the measurement configuration #c.

Another example of the structure of the first information is shown in (b) in FIG. 9. A BW end (BW end) field indicates the largest value in the w values of the bandwidth. An $N_{TX}$ end ($N_{TX}$ end) field indicates the largest value in the t values of the number of transmit antennas. An $N_{RX}$ end ($N_{RX}$ end) field indicates the largest value in the r values of the number of receive antennas. For an $N_g$ 16 supported field, an accurate $N_b$ field, $N_g$=4 or 8 (1), $N_g$=16 (1), $N_g$=4 or 8 (2), and $N_g$=16 (2), refer to the descriptions of (a) in FIG. 9.

It should be noted that FIG. 9 is merely an example. The N measurement configurations corresponding to the N sensing measurement result feedback requirements indicated by the first information is sorted in the following manner: first changing the values of the subcarrier grouping sizes, then sequentially changing the values of the other parameters, and sorting the N measurement configurations in ascending order of the values of the parameters. A manner of sorting the N measurement configurations is not limited in embodiments of this application. For example, if the N measurement configurations are sorted in descending order of the values of the parameters, the $N_g$=16 (1) field is before the $N_g$=4 or 8 (1) field, and the $N_g$=16 (2) field is before the $N_g$=4 or 8 (2) field.

It should be further noted that, in FIG. 9, only an example in which the first information indicates the following plurality of items is used: the t values of the number of transmit antennas, the r values of the number of receive antennas, the g values of the subcarrier grouping size, the b values of the quantization bit value, or the w values of the bandwidth. The first information may indicate one or more of the foregoing items. For example, if the t values of the number of transmit antennas always include 1 to 8, the first information may not indicate the t values of the number of transmit antennas.

The following describes a manner in which the second device determines the target feedback requirement based on the first information.

After receiving the first information from the first device, the second device may determine, based on the first information, the sensing measurement result feedback requirement corresponding to each of the N different measurement configurations.

For example, if the first information indicates the correspondences between the N different measurement configurations and the different sensing measurement result feedback requirements, the second device may determine, based on the first information, the sensing measurement result feedback requirement corresponding to each of the N different measurement configurations. For example, if the first information is shown in (a) in FIG. 8, the second device may determine the measurement configuration #1 based on the first $\lceil \log_2 N \rceil$ bits of the first information, and determine, based on the $(\lceil \log_2 N \rceil +1)^{th}$ bit to the $(\lceil \log_2 N \rceil +3)^{th}$ bit, the sensing measurement result feedback requirement corresponding to the measurement configuration #1. Similarly, the second device may determine, based on the first information, the sensing measurement result feedback requirements corresponding to the remaining measurement configurations. For another example, if the first information is shown in (b) in FIG. 8, the second device may determine, based on the first 3 bits of the first information, the sensing measurement result feedback requirement #1, and determine, based on the 4th bit to the $(N_1 \times \lceil \log_2 N \rceil +3)^{th}$ bit, the $N_1$ measurement configurations corresponding to the sensing measurement result feedback requirement #1. Similarly, the second device may determine, based on the first information, the measurement configurations corresponding to the remaining sensing measurement result feedback requirements.

For example, if the first information indicates the N sensing measurement result feedback requirements, the second device may determine the N sensing measurement result feedback requirements based on the first information, and further determine that the N sensing measurement result feedback requirements one-to-one correspond to the N measurement configurations arranged in the predefined order.

It may be understood that a prerequisite for determining, by the second device, the N measurement configurations arranged in the predefined order is that the second device determines one or more of the following: the t values of the number of transmit antennas, the r values of the number of receive antennas, the b values of the quantization bit value, the g values of the subcarrier grouping size, and the w values of the bandwidth. It should be noted that a manner in which the second device determines the value of the foregoing parameter is the same as a manner in which the first device determines the value of the foregoing parameter.

For example, the second device may determine, in a manner predefined in a protocol or a standard, that the value of each parameter includes all the possible values. For example, if all the possible values of the number of transmit antennas are 1 to 8, the second device determines that the t values of the number of transmit antennas include 1 to 8.

For another example, the second device may determine the value of each parameter based on a capability of the first device. For example, if a number of transmit antennas supported by the first device is 1 to 4, the t values of the number of transmit antennas determined by the second device include 1 to 4.

For another example, the second device may determine, in a manner predefined in a protocol or a standard, not to consider impact of different values of a parameter on the feedback requirement. For example, if the second device determines not to consider the impact of the different values of the quantization bit value on the feedback requirement, the second device may determine that the b values of the quantization bit value include a value 10.

For another example, if the first information further indicates the t values of the number of transmit antennas, the second device may determine the t values of the number of transmit antennas based on the first information. If the first information further indicates the r values of the number of receive antennas, the second device may determine the r values of the number of receive antennas based on the first information. If the first information further indicates the g values of the subcarrier grouping size, the second device may determine the g values of the subcarrier grouping size based on the first information. If the first information further indicates the b values of the quantization bit value, the second device may determine the b values of the quantization bit value based on the first information. If the first information further indicates the w values of the bandwidth, the second device may determine the w values of the bandwidth based on the first information.

After determining values of the foregoing one or more parameters, the second device may determine the N measurement configurations arranged in the predefined order. Further, the second device determines the $n^{th}$ sensing measurement result feedback requirement indicated by the first information, to correspond to the $n^{th}$ measurement configuration in the N measurement configurations arranged in the predefined order.

After determining, based on the first information, the sensing measurement result feedback requirement corresponding to each of the N different measurement configurations, the second device may determine the target feedback requirement corresponding to the target measurement configuration.

For example, if the N different measurement configurations include the target measurement configuration, the second device may directly determine the target feedback requirement corresponding to the target measurement configuration.

For example, if the N different measurement configurations do not include the target measurement configuration, the second device determines that the target feedback requirement is a preset feedback requirement. For example, the preset feedback requirement is that the required duration from the moment at which the first device finishes receiving the first PPDU to the moment at which the first device starts to send the second PPDU is X $\mu$s, where X is a preset value. For another example, the preset feedback requirement is that the feedback mode used by the first device to send the second PPDU is the delayed feedback mode.

For example, if the N different measurement configurations do not include the target measurement configuration, the second device determines a sensing measurement result feedback requirement corresponding to a first measurement configuration as the target feedback requirement, where the first measurement configuration belongs to the N different measurement configurations. The first measurement configuration includes one or more of the following parameters: a first number of transmit antennas, a first number of receive antennas, a first subcarrier grouping size, a first quantization bit value, or a first bandwidth.

For example, the first measurement configuration is any one of the N different measurement configurations.

For another example, the following relationship exists between the first measurement configuration and the target measurement configuration:

A value of the target quantization bit value included in the target measurement configuration is 8, a value of the first quantization bit value included in the first measurement configuration is 10, and a value of a remaining sensing measurement parameter in the first measurement configuration is the same as a value of a corresponding parameter in the target measurement configuration. For example, a value of the target number of transmit antennas is the same as a value of the first number of transmit antennas, a value of the target number of receive antennas is the same as a value of the first number of receive antennas, a value of the target subcarrier grouping size is the same as a value of the first subcarrier grouping size, and a value of the target bandwidth is the same as a value of the first bandwidth.

For another example, the following relationship exists between the first measurement configuration and the target measurement configuration: A difference between a sensing measurement parameter in the target measurement configuration and a corresponding parameter in the first measurement configuration is minimum. To be specific, a value of the sensing measurement parameter in the target measurement configuration is the same as a value of the corresponding parameter in the first measurement configuration, or a difference between the sensing measurement parameter in the target measurement configuration and the corresponding parameter in the first measurement configuration is minimum, or a difference between a sensing measurement parameter in the first measurement configuration and a corresponding parameter in the target measurement configuration is minimum. It should be noted that the difference in this embodiment of this application is a positive number.

When the difference between the sensing measurement parameter in the target measurement configuration and the corresponding parameter in the first measurement configuration is minimum, the first measurement configuration may be determined in the following two manners:

Manner 1:

The first measurement configuration is a measurement configuration that has a largest number of parameters whose values are same as those in the target measurement configuration in the N different measurement configurations. In addition, for first parameters whose values are different and that are included in the first measurement configuration and the target measurement configuration, a first parameter included in the first measurement configuration is greater than a first parameter included in the target measurement configuration, and a difference between the first parameter included in the first measurement configuration and the first parameter included in the target measurement configuration is not greater than differences between first parameters included in N' different measurement configurations and the first parameter included in the target measurement configuration. The N' different measurement configurations belong to the N different measurement configurations, and a first parameter included in each of the N' different measurement configurations is greater than the first parameter included in the target measurement configuration.

For example, it is assumed that the target measurement configuration is: the value of the target number of transmit antennas is 4, the value of the target number of receive antennas is 4, the value of the target bandwidth is 40 MHz, the value of the target subcarrier grouping size is 4, and the value of the target quantization bit value is 8. The N different measurement configurations include the following measurement configurations that have four parameters whose values are the same as those in the target measurement configuration: measurement configuration #A: a value of a number of transmit antennas is 4, a value of a number of receive antennas is 4, a value of a bandwidth is 20 MHz, a value of a subcarrier grouping size is 4, and a value of a quantization bit value is 8; measurement configuration #B: a value of a number of transmit antennas is 4, a value of a number of receive antennas is 4, a value of a bandwidth is 80 MHz, a value of a subcarrier grouping size is 4, and a value of a quantization bit value is 8; measurement configuration #C: a value of a number of transmit antennas is 4, a value of a number of receive antennas is 4, a value of a bandwidth is 160 MHz, a value of a subcarrier grouping size is 4, and a value of a quantization bit value is 8; and measurement configuration #D: a value of a number of transmit antennas is 4, a value of a number of receive antennas is 4, a value of a bandwidth is 320 MHz, a value of a subcarrier grouping size is 4, and a value of a quantization bit value is 8. It can be learned from the foregoing that the values of the bandwidths in the measurement configuration #A to the measurement configuration #D are different from the value of the target bandwidth, that is, the bandwidth is an example of the first parameter. Further, it is determined, based on the values of the bandwidths, that the N' different measurement configurations include the measurement configuration #B to the measurement configuration #D. Further, because a difference between the value of the bandwidth included in the measurement configuration #B and the value of the target bandwidth is minimum, the measurement configuration #B is determined as the first measurement configuration.

Another description of Manner 1 is as follows:

A manner of determining the first measurement configuration based on the target measurement configuration is as follows: If values of parameters #a used to determine the N different measurement configurations include a value of a parameter #a in the target measurement configuration, a value of a parameter #a in the first measurement configuration is the same as the value of the parameter #a in the target measurement configuration; or if values of parameters #a used to determine the N different measurement configurations do not include a value of a parameter #a in the target measurement configuration, a value of a parameter #a in the first measurement configuration is a value that is greater than the value of the parameter #a in the target measurement configuration and that is closest to the value of the parameter #a in the target measurement configuration in the values of the parameters #a used to determine the N different measurement configurations. The parameter #a is any one of the following: a number of transmit antennas, a number of receive antennas, a subcarrier grouping size, a quantization bit value, and a bandwidth.

For example, the parameter #a is the number of transmit antennas. If the first information includes the T bits, that is, the first information further indicates the t values of the number of transmit antennas, a manner of determining the value of the first number of transmit antennas based on the value of the target number of transmit antennas is as follows: If a target bit in the T bits indicates that the t values include the value of the target number of transmit antennas, the value of the first number of transmit antennas is equal to the value of the target number of transmit antennas; or if a target bit in the T bits indicates that the t values do not include the value of the target number of transmit antennas, the value of the first number of transmit antennas is a value corresponding to a right closest bit in the T bits. The target bit in the T bits is a bit corresponding to the value of the target number of transmit antennas, the right closest bit is on the right side of the target bit, and is a bit that is closest to the target bit and that indicates that the t values include the value corresponding to the bit.

For example, it is assumed that a structure of the first information is shown in (a) in FIG. 9. The BW bitmap field is "10011", to be specific, indicates that the w values of the bandwidth include 20 MHz, 160 MHz, and 320 MHz. The NTX bitmap field is "11010100", to be specific, indicates that the t values of the number of transmit antennas include 1, 2, 4, and 6. The NRX bitmap field is "11110010", to be specific, indicates that the r values of the number of receive antennas include 1, 2, 3, 4, and 7. The Ng16 supported field indicates that the g values of the subcarrier grouping size do not include 16. The accurate Nb field indicates that the b values of the quantization bit value do not include 8.

It is assumed that the target measurement configuration is: the value of the target number of transmit antennas is 3, the value of the target number of receive antennas is 4, the value of the target bandwidth is 40 MHz, the value of the target subcarrier grouping size is 4, and the value of the target quantization bit value is 10. Because the w values of the bandwidth do not include 40 MHz, and the t values of the number of transmit antennas do not include 3, the second device determines, based on the first information, that the N different measurement configurations do not include the target measurement configuration.

To ensure that the difference between the sensing measurement parameter in the target measurement configuration and the corresponding parameter in the first measurement configuration is minimum, the second device determines that the value of the first number of receive antennas in the first measurement configuration is 4, the value of the first quantization bit value is 10, and the value of the first subcarrier grouping size is 4. Further, the second device determines that the value of the first number of transmit antennas is a value corresponding to a bit #1 (an example of the right closest bit) in the 8 bits included in the NTX bitmap field. The bit #1 is on the right side of a bit #2 (an example of the target bit), the bit #1 is a bit whose value is 1 and that is closest to the bit #2, and the bit #2 is a bit corresponding to a value 3 in the 8 bits included in the NTX bitmap field. Based on the foregoing descriptions, the second device determines that the value of the first number of transmit antennas is 4. The second device determines that the value of the first bandwidth is a value corresponding to a bit #3 (an example of the right closest bit) in the 5 bits included in the BW bitmap field. The bit #3 is on the right side of a bit #4 (an example of the target bit), the bit #3 is a bit whose value is 1 and that is closest to the bit #4, and the bit #4 is a bit corresponding to a value 40 MHz in the 8 bits included in the BW bitmap field. Based on the foregoing descriptions, the second device determines that the value of the first bandwidth is 160 MHz.

Manner 2:

The first measurement configuration is a measurement configuration that has a largest number of parameters whose values are the same as those in the target measurement configuration in the N different measurement configurations. In addition, for first parameters whose values are different and that are included in the first measurement configuration and the target measurement configuration, a first parameter included in the first measurement configuration is less than a difference of a first parameter included in the target measurement configuration, and a difference between the difference of the first parameter included in the target measurement configuration and the first parameter included in the first measurement configuration is not greater than differences between the first parameter included in the target measurement configuration and first parameters included in N" different measurement configurations. The N" different measurement configurations belong to the N different measurement configurations, and a first parameter included in each of the N" different measurement configurations is less than the first parameter included in the target measurement configuration.

For example, it is assumed that the target measurement configuration is: the value of the target number of transmit antennas is 4, the value of the target number of receive antennas is 4, the value of the target bandwidth is 160 MHz, the value of the target subcarrier grouping size is 16, and the value of the target quantization bit value is 8. The N different measurement configurations include the following measurement configurations that have four parameters whose values are the same as those in the target measurement configuration: measurement configuration #E: a value of a number of transmit antennas is 4, a value of a number of receive antennas is 4, a value of a bandwidth is 20 MHz, a value of a subcarrier grouping size is 16, and a value of a quantization bit value is 8; measurement configuration #F: a value of a number of transmit antennas is 4, a value of a number of receive antennas is 4, a value of a bandwidth is 40 MHz, a value of a subcarrier grouping size is 16, and a value of a quantization bit value is 8; measurement configuration #G: a value of a number of transmit antennas is 4, a value of a number of receive antennas is 4, a value of a bandwidth is 80 MHz, a value of a subcarrier grouping size is 16, and a value of a quantization bit value is 8; and measurement configuration #H: a value of a number of transmit antennas is 4, a value of a number of receive antennas is 4, a value of a bandwidth is 320 MHz, a value of a subcarrier grouping size is 16, and a value of a quantization bit value is 8. It can be learned from the foregoing that the values of the bandwidths in the measurement configuration #A to the measurement configuration #D are different from the value of the target bandwidth, that is, the bandwidth is an example of the first parameter. Further, it is determined, based on the values of the bandwidths, that the N" different measurement configurations include the measurement configuration #E to the measurement configuration #G. Further, because a difference between the value of the target bandwidth and the value of the bandwidth included in the measurement configuration #G is minimum, the measurement configuration #G is determined as the first measurement configuration.

Another description of Manner 2 is as follows:

A manner of determining the first measurement configuration based on the target measurement configuration is as follows: If values of parameters #a used to determine the N different measurement configurations include a value of a parameter #a in the target measurement configuration, a value of a parameter #a in the first measurement configuration is the same as the value of the parameter #a in the target measurement configuration; or if values of parameters #a used to determine the N different measurement configurations do not include a value of a parameter #a in the target measurement configuration, a value of a parameter #a in the first measurement configuration is a value that is less than the value of the parameter #a in the target measurement configuration and that is closest to the value of the parameter #a in the target measurement configuration in the values of the parameter #a used to determine the N different measurement configurations. The parameter #a is any one of the following: a number of transmit antennas, a number of receive antennas, a subcarrier grouping size, a quantization bit value, and a bandwidth.

For example, the parameter #a is the number of transmit antennas. If the first information includes the T bits, that is, the first information further indicates the t values of the number of transmit antennas, a manner of determining the value of the first number of transmit antennas based on the value of the target number of transmit antennas is as follows: If a target bit in the T bits indicates that the t values include the value of the target number of transmit antennas, the value of the first number of transmit antennas is equal to the value of the target number of transmit antennas; or if a target bit in the T bits indicates that the t values do not include the value of the target number of transmit antennas, the value of the first number of transmit antennas is a value corresponding to a left closest bit in the T bits. The target bit in the T bits is a bit corresponding to the value of the target number of transmit antennas, the left closest bit is on the left side of the target bit, and is a bit that is closest to the target bit and that indicates that the t values include the value corresponding to the bit.

For example, it is assumed that a structure of the first information is shown in (a) in FIG. 9. The BW bitmap field is "10011", to be specific, indicates that the w values of the bandwidth include 20 MHz, 160 MHz, and 320 MHz. The NTX bitmap field is "11010100", to be specific, indicates that the t values of the number of transmit antennas include 1, 2, 4, and 6. The NRX bitmap field is "11110010", to be specific, indicates that the r values of the number of receive antennas include 1, 2, 3, 4, and 7. The Ng16 supported field indicates that the g values of the subcarrier grouping size do not include 16. The accurate Nb field indicates that the b values of the quantization bit value do not include 8.

It is assumed that the target measurement configuration is: the value of the target number of transmit antennas is 3, the value of the target number of receive antennas is 4, the value of the target bandwidth is 40 MHz, the value of the target subcarrier grouping size is 4, and the value of the target quantization bit value is 10. Because the w values of the bandwidth do not include 40 MHz, and the t values of the number of transmit antennas do not include 3, the second device determines, based on the first information, that the N different measurement configurations do not include the target measurement configuration.

To ensure that the difference between the sensing measurement parameter in the target measurement configuration and the corresponding parameter in the first measurement configuration is minimum, the second device determines that the value of the first number of receive antennas in the first measurement configuration is 4, the value of the first quantization bit value is 10, and the value of the first subcarrier grouping size is 4. Further, the second device determines that the value of the first number of transmit antennas is a value corresponding to a bit #a (an example of the left closest bit) in the 8 bits included in the NTX bitmap field. The bit #a is on the left side of a bit #b (an example of the target bit), the bit #a is a bit whose value is 1 and that is closest to the bit #b, and the bit #b is a bit corresponding to a value 3 in the 8 bits included in the NTX bitmap field. Based on the foregoing descriptions, the second device determines that the value of the first number of transmit antennas is 2. The second device determines that the value of the first bandwidth is a value corresponding to a bit #c (an example of the left closest bit) in the 5 bits included in the BW bitmap field. The bit #c is on the left side of a bit #d (an example of the target bit), the bit #c is a bit whose value is 1 and that is closest to the bit #d, and the bit #d is a bit corresponding to a value 40 MHz in the 8 bits included in the BW bitmap field. Based on the foregoing descriptions, the second device determines that the value of the first bandwidth is 20MHz.

If the first information indicates, in the following manner, the values of the parameters #a used to determine the N different measurement configurations: the first information indicates a largest value in the values of the parameters #a, or the first information indicates a smallest value in the values of the parameters #a, the manner in which the second device determines the first measurement configuration based on the target measurement configuration is similar to Manner 1 or Manner 2. Details are not described in this embodiment of this application.

It should be noted that if the second device determines that the N different measurement configurations neither include the target measurement configuration nor include the first measurement configuration, the second device determines that the target feedback requirement is the preset feedback requirement. For example, if the second device cannot determine the first measurement configuration in Manner 1, for example, the values of the parameters #a used to determine the N different measurement configurations are all less than the value of the parameter #a in the target measurement configuration, the second device determines that the target feedback requirement is the preset feedback requirement.

In this embodiment of this application, the first device may indicate, to the second device, the sensing measurement result feedback requirement corresponding to each of the N different measurement configurations, so that the second device may determine the target feedback requirement corresponding to the target measurement configuration. In this way, it may be determined whether the second device meets the target feedback requirement. This helps improve feedback efficiency.

In addition, each of the N different measurement configurations may include one or more of the following parameters: the number of transmit antennas, the number of receive antennas, the subcarrier grouping size, the quantization bit value, or the bandwidth. Therefore, impact of different values of the foregoing one or more parameters on the feedback requirement may be considered. Therefore, the first device can flexibly indicate measurement result feedback requirements corresponding to different measurement configurations. This helps improve feedback efficiency.

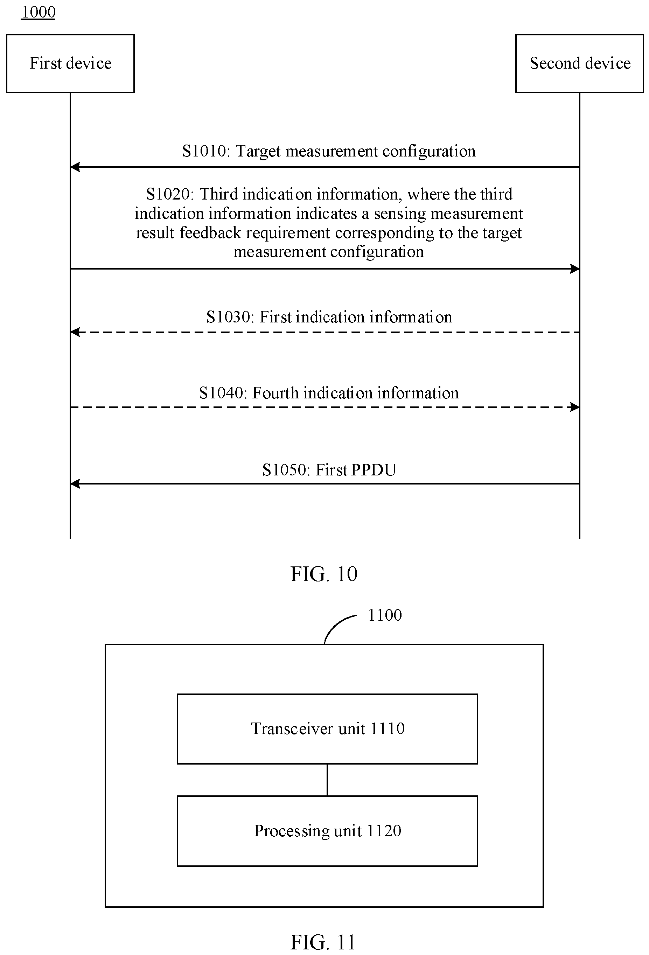

FIG. 10 is a schematic flowchart of a communication method according to an embodiment of this application. The method 1000 shown in FIG. 10 may include the following steps.

S1010: A second device sends a target measurement configuration to a first device.

Correspondingly, the first device receives the target measurement configuration from the second device.

For descriptions of the target measurement configuration, refer to S610 in the foregoing method 600.

It should be noted that, the second device may send, to the first device, all sensing measurement parameters included in the target measurement configuration, or send, to the first device, a part of sensing measurement parameters included in the target measurement configuration.

For example, the second device sends the target measurement configuration to the first device in a sensing measurement setup procedure. For example, the second device sends sensing measurement setup request information to the first device, where the sensing measurement setup request information includes the target measurement configuration.

In a possible implementation, the target measurement configuration includes a DMG sensing measurement setup element (DMG sensing measurement setup element). For example, the second device may set a report type field in the DMG sensing measurement setup element to a value 3, 5, 6, or 7, to indicate Doppler reporting (Doppler reporting).

S1020: The first device sends third indication information to the second device, where the third indication information indicates a sensing measurement result feedback requirement corresponding to the target measurement configuration.

Correspondingly, the second device receives the third indication information from the first device.

For example, the sensing measurement result feedback requirement indicated by the third indication information is one of the foregoing Table 1 or Table 2. For more descriptions of the sensing measurement result feedback requirement, refer to S610 in the foregoing method 600.

It may be understood that before the first device sends the third indication information to the second device, the first device receives the target measurement configuration from the second device. Therefore, the first device may determine the sensing measurement result feedback requirement corresponding to the target measurement configuration, and indicate the sensing measurement result feedback requirement to the second device via the third indication information.

For example, the first device sends the third indication information to the second device in the sensing measurement setup procedure. For example, the first device sends sensing measurement setup response information to the second device, where the sensing measurement setup response information includes the third indication information.

In a possible implementation, the third indication information includes a burst response delay subelement (burst response delay subelement). The burst response delay subelement is set with time (in milliseconds) required to calculate a response of the first device to a DMG sensing burst defined by the DMG sensing measurement setup element of the second device.

The burst response delay subelement includes a burst response delay field (burst response delay field), and the burst response delay field includes time (in milliseconds) spent by the first device to generate a sensing measurement report in the burst after a first PPDU ends. The first PPDU is a last PPDU in the burst, and the time spent by the first device to generate the sensing measurement report in the burst is included in time from a moment at which the first device finishes receiving the first PPDU to a moment at which the first device starts to send a second PPDU.

Optionally, the method 1000 further includes S1030.

S1030: The second device sends first indication information to the first device.

Correspondingly, the first device receives the first indication information from the second device.

For example, the second device sends the first indication information to the first device in a measurement instance.

For more descriptions of S 1030, refer to S620 in the foregoing method 600.

Optionally, in S 1010, the second device sends the part of sensing measurement parameters included in the target measurement configuration to the first device. In this case, in the measurement instance, the second device may send a remaining sensing measurement parameter included in the target measurement configuration to the first device.

S1040: The first device sends fourth indication information to the second device.

Correspondingly, the second device receives the fourth indication information from the first device.

For more descriptions of S 1040, refer to S630 in the foregoing method 600.

S1050: The second device sends the first PPDU to the first device.

Correspondingly, the first device receives the first PPDU from the second device.

For more descriptions of S 1050, refer to S640 in the foregoing method 600.

It should be noted that, if the first device receives the part of sensing measurement parameters included in the target measurement configuration in S1010, the sensing measurement result feedback requirement indicated by the first device to the second device based on the part of sensing measurement parameters included in the target measurement configuration may be inaccurate. Further, to enable the second device to determine a feedback mode used by the first device to send the second PPDU, the second PPDU sent by the first device includes second indication information. For descriptions of the second indication information, refer to S640 in the foregoing method 600.

In this embodiment of this application, after receiving the target measurement configuration from the second device, the first device may determine the sensing measurement result feedback requirement based on the target measurement configuration, and indicate the sensing measurement result feedback requirement to the second device via the third indication information, so that the second device may obtain the sensing measurement result feedback requirement corresponding to the target measurement configuration, and it may be determined whether the second device meets the sensing measurement result feedback requirement. This helps improve feedback efficiency. For example, if the sensing measurement result feedback requirement includes target required duration, and the second device can meet the sensing measurement result feedback requirement, it indicates that the first device has sufficient processing and reaction time. Therefore, the first device may report a sensing measurement result in an immediate feedback mode. This can improve feedback efficiency.

It should be noted that, although this specification focuses on a time requirement design in a trigger-based sensing measurement instance, embodiments of this application are also applicable to a time requirement design in a non-trigger-based sensing measurement instance. Similarly, it is assumed that a device that sends the first PPDU is a third device, and a device that feeds back the sensing measurement result based on the first PPDU is a fourth device. The fourth device may send the first information in the foregoing method 600 or the third indication information in the foregoing method 1000 to the first device. Optionally, the second PPDU sent by the fourth device to the third device may further include the second indication information described in the foregoing method 600, and the second PPDU includes the sensing measurement result obtained based on the first PPDU.

FIG. 11 is a block diagram of an apparatus according to an embodiment of this application. As shown in FIG. 11, the apparatus 1100 may include a transceiver unit 1110. The transceiver unit 1110 may communicate with the outside, and the transceiver unit 1010 may also be referred to as a communication interface or a communication unit.

Optionally, the apparatus 1100 may further include a processing unit 1120, and the processing unit 1120 is configured to perform data processing.

Optionally, the apparatus 1100 may further include a storage unit. The storage unit may be configured to store instructions and/or data. The processing unit 1120 may read the instructions and/or the data in the storage unit, so that the apparatus implements the foregoing method embodiment.

In a first design, the apparatus 1100 may be the first device in the foregoing embodiments, or may be a component (for example, a chip) of the first device. The apparatus 1100 may implement steps or procedures performed by the first device in the foregoing method embodiment. The transceiver unit 1110 may be configured to perform operations related to receiving and sending of the first device in the foregoing method embodiment.

In a possible implementation, the transceiver unit 1120 is configured to send first information to a second device, where the first information is used to determine a sensing measurement result feedback requirement corresponding to a target measurement configuration, the first information indicates a sensing measurement result feedback requirement corresponding to each of N different measurement configurations, and N is a positive integer; the sensing measurement result feedback requirement includes at least one of the following: required duration from a moment at which a first device finishes receiving a first PPDU to a moment at which the first device starts to send a second PPDU, or a feedback mode used by a first device to send a second PPDU; and the first PPDU is used by the first device to perform sensing measurement to obtain a sensing measurement result, the second PPDU includes the sensing measurement result, and the feedback mode includes an immediate feedback mode or a delayed feedback mode; and the transceiver unit 1120 is further configured to receive the first PPDU from the second device.

In a possible implementation, the transceiver unit 1120 is configured to send third indication information to a second device, where the third indication information indicates a sensing measurement result feedback requirement corresponding to a target measurement configuration; the sensing measurement result feedback requirement includes at least one of the following: required duration from a moment at which a first device finishes receiving a first PPDU to a moment at which the first device starts to send a second PPDU, or a feedback mode used by a first device to send a second PPDU; and the first PPDU is used by the first device to perform sensing measurement to obtain a sensing measurement result, the second PPDU includes the sensing measurement result, and the feedback mode includes an immediate feedback mode or a delayed feedback mode; and the transceiver unit 1120 is further configured to receive the first PPDU from the second device.

In a second design, the apparatus 1100 may be the second device in the foregoing embodiments, or may be a component (for example, a chip) of the second device. The apparatus 1100 may implement steps or procedures performed by the second device in the foregoing method embodiment. The transceiver unit 1110 may be configured to perform operations related to receiving and sending of the second device in the foregoing method embodiment.

In a possible implementation, the transceiver unit 1120 is configured to receive first information from a first device, where the first information is used to determine a sensing measurement result feedback requirement corresponding to a target measurement configuration, the first information indicates a sensing measurement result feedback requirement corresponding to each of N different measurement configurations, and N is a positive integer; the sensing measurement result feedback requirement includes at least one of the following: required duration from a moment at which the first device finishes receiving a first PPDU to a moment at which the first device starts to send a second PPDU, or a feedback mode used by the first device to send a second PPDU; and the first PPDU is used by the first device to perform sensing measurement to obtain a sensing measurement result, the second PPDU includes the sensing measurement result, and the feedback mode includes an immediate feedback mode or a delayed feedback mode; and the transceiver unit 1120 is further configured to send the first PPDU to the first device.

In a possible implementation, the transceiver unit 1120 is configured to receive third indication information from a first device, where the third indication information indicates a sensing measurement result feedback requirement corresponding to a target measurement configuration; the sensing measurement result feedback requirement includes at least one of the following: required duration from a moment at which the first device finishes receiving a first PPDU to a moment at which the first device starts to send a second PPDU, or a feedback mode used by the first device to send a second PPDU; and the first PPDU is used by the first device to perform sensing measurement to obtain a sensing measurement result, the second PPDU includes the sensing measurement result, and the feedback mode includes an immediate feedback mode or a delayed feedback mode; and the transceiver unit 1120 is further configured to send the first PPDU to the first device.

It should be understood that a specific process in which the units perform the foregoing corresponding steps is described in detail in the foregoing method embodiments. For brevity, details are not described herein.

It should be further understood that the apparatus 1100 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1100 may be specifically the first device in the foregoing embodiments, and may be configured to perform procedures and/or steps corresponding to the first device in the foregoing method embodiments. Alternatively, the apparatus 1100 may be specifically the second device in the foregoing embodiments, and may be configured to perform procedures and/or steps corresponding to the second device in the foregoing method embodiments. To avoid repetition, details are not described herein again. The transceiver unit 1110 may alternatively be a transceiver circuit (for example, may include a receiver circuit and a transmitter circuit), and the processing unit 1120 may be a processing circuit. The apparatus in FIG. 11 may be a device in the foregoing embodiments, or may be a chip or a chip system, for example, a system on chip (system of chip, SoC). The transceiver unit may be an input/output circuit or a communication interface. The processing unit is a processor, a microprocessor, or an integrated circuit integrated on the chip. This is not limited herein.

The apparatus 1100 in the foregoing solutions has a function of implementing the corresponding steps performed by the first device or the second device in the foregoing methods. The function may be implemented by hardware, or may be implemented by hardware executing corresponding software. The hardware or the software includes one or more modules corresponding to the foregoing function. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform receiving and sending operations and a related processing operation in the method embodiments.

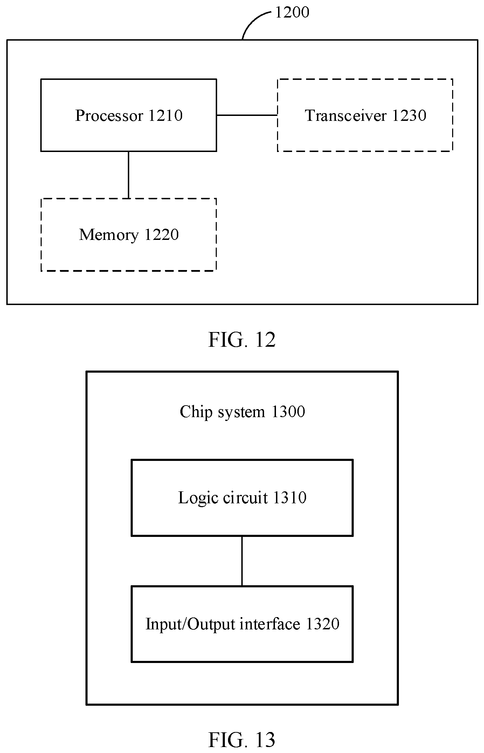

FIG. 12 is a diagram of an apparatus 1200 according to an embodiment of this application. The apparatus 1200 includes a processor 1210. The processor 1210 is configured to execute a computer program or instructions stored in a memory 1220, or read data or the instructions stored in the memory 1220, to perform the methods in the foregoing method embodiments. Optionally, there are one or more processors 1210.

Optionally, as shown in FIG. 12, the apparatus 1200 further includes the memory 1220, and the memory 1220 is configured to store the computer program or the instructions and/or the data. The memory 1220 and the processor 1210 may be integrated, or may be disposed separately. Optionally, there are one or more memories 1220.

Optionally, as shown in FIG. 12, the apparatus 1200 further includes a transceiver 1230. The transceiver 1230 is configured to receive a signal and/or send a signal. For example, the processor 1210 is configured to control the transceiver 1230 to receive the signal and/or send the signal.

In a solution, the apparatus 1200 is configured to implement the operations performed by the first device in the foregoing method embodiments.

For example, the processor 1210 is configured to execute the computer program or the instructions stored in the memory 1220, to implement related operations performed by the first device in the foregoing method embodiments, for example, the method performed by the first device in the embodiment shown in FIG. 6 or FIG. 10.

In another solution, the apparatus 1200 is configured to implement the method performed by the second device in the foregoing method embodiments.

For example, the processor 1210 is configured to execute the computer program or the instructions stored in the memory 120, to implement related operations performed by the second device in the foregoing method embodiments, for example, the method performed by the second device in the embodiment shown in FIG. 6 or FIG. 10.

It should be understood that the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described herein is intended to include, but is not limited to, these and any other appropriate type of memory.

FIG. 13 is a diagram of a chip system 1300 according to an embodiment of this application. The chip system 1300 (or may also be referred to as a processing system) includes a logic circuit 1310 and an input/output interface (input/output interface) 1320.

The logic circuit 1310 may be a processing circuit in the chip system 1300. The logic circuit 1310 may be coupled to and connected to a storage unit, and invoke instructions in the storage unit, to enable the chip system 1300 to implement the methods and functions in embodiments of this application. The input/output interface 1320 may be an input/output circuit in the chip system 1300, and outputs information processed by the chip system 1300, or inputs to-be-processed data or signaling into the chip system 1300 for processing.

Specifically, for example, if the chip system 1300 is mounted on a first device, the logic circuit 1310 is coupled to the input/output interface 1320, the logic circuit 1310 may send first information through the input/output interface 1320, and the first information may be generated by the logic circuit 1310. For another example, if the chip system 1300 is mounted on a second device, the logic circuit 1310 is coupled to the input/output interface 1320, the logic circuit 1310 may receive first information through the input/output interface 1320, and the logic circuit 1320 determines a sensing measurement result feedback requirement based on the first information.

In a solution, the chip system 1300 is configured to implement the operations performed by the first device in the foregoing method embodiments.

For example, the logic circuit 1310 is configured to implement a processing-related operation performed by the first device in the foregoing method embodiment, for example, a processing-related operation performed by the first device in the embodiment shown in FIG. 6 or FIG. 10. The input/output interface 1320 is configured to implement an operation related to sending and/or receiving performed by the first device in the foregoing method embodiment, for example, a processing-related operation performed by the first device in the embodiment shown in FIG. 6 or FIG. 10.

In another solution, the chip system 1300 is configured to implement the operations performed by the second device in the foregoing method embodiments.

For example, the logic circuit 1310 is configured to implement a processing-related operation performed by the second device in the foregoing method embodiment, for example, a processing-related operation performed by the second device in the embodiment shown in FIG. 6 or FIG. 10. The input/output interface 1320 is configured to implement an operation related to sending and/or receiving performed by the second device in the foregoing method embodiment, for example, a processing-related operation performed by the second device in the embodiment shown in FIG. 6 or FIG. 10.

An embodiment of this application further provides a computer-readable storage medium. The computer-readable storage medium stores computer instructions for implementing the methods performed by a device in the foregoing method embodiments.

For example, when the computer program is executed by a computer, the computer is enabled to implement the method performed by the first device in the foregoing method embodiment.

For another example, when the computer program is executed by a computer, the computer is enabled to implement the method performed by the second device in the foregoing method embodiment.

An embodiment of this application further provides a computer program product, including instructions. When the instructions are executed by a computer, the method performed by a device (for example, a first device or a second device) in the foregoing method embodiment is implemented.

An embodiment of this application further provides a communication system, including the foregoing first device and second device.

For explanations and beneficial effect of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a special-purpose computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

sending, by a second device, a target measurement configuration to a first device;

receiving, by the second device, third indication information from the first device, wherein the third indication information indicates a sensing measurement result feedback requirement corresponding to the target measurement configuration, the sensing measurement result feedback requirement comprises required duration from a moment at which the first device finishes receiving a first physical layer protocol data unit PPDU to a moment at which the first device starts to send a second PPDU, the first PPDU is used by the first device to perform sensing measurement to obtain a sensing measurement result, and the second PPDU comprises the sensing measurement result; and

sending, by the second device, the first PPDU to the first device.

2. The method according to claim 1, wherein the target measurement configuration comprises a sensing measurement setup element, and the sensing measurement setup element comprises a report type field.

3. The method according to claim 2, wherein the report type field is set to 3, 5, 6, or 7.

4. The method according to any one of claims 1 to 3, wherein the third indication information comprises a burst response delay subelement, and the burst response delay subelement comprises time spent by the first device to generate a sensing measurement report after the first PPDU ends.

5. The method according to claim 1, wherein before the sending, by the second device, the first PPDU, the method further comprises:

if the second device meets the sensing measurement result feedback requirement corresponding to the target measurement configuration, sending, by the second device, first indication information to the first device, wherein the first indication information indicates the first device to send the second PPDU in an immediate feedback mode, or indicates that the second device is capable of meeting the sensing measurement result feedback requirement corresponding to the target measurement configuration; or

if the second device does not meet the sensing measurement result feedback requirement corresponding to the target measurement configuration, sending, by the second device, first indication information to the first device, wherein the first indication information indicates the first device to send the second PPDU in a delayed feedback mode, or indicates that the second device is not capable of meeting the sensing measurement result feedback requirement corresponding to the target measurement configuration; or

sending, by the second device, first indication information to the first device, wherein the first indication information indicates duration that is capable of being ensured by the second device and that is from the moment at which the first device finishes receiving the first PPDU to a moment at which the first device starts to send a third PPDU, the third PPDU is a PPDU sent by the first device to the second device in a first measurement instance, and the first measurement instance is a measurement instance in which the first device receives the first PPDU.

6. The method according to any one of claims 1 to 3, wherein the target measurement configuration comprises one or more of the following sensing measurement parameters: a target number of transmit antennas, a target number of receive antennas, a target subcarrier grouping size, a target quantization bit value of each real part or imaginary part corresponding to channel state information CSI, and a target bandwidth.

7. The method according to any one of claims 1 to 3, wherein the second PPDU further comprises one or more of the following: second indication information, an identifier of sensing measurement setup corresponding to the sensing measurement result, and an identifier of a sensing measurement instance corresponding to the sensing measurement result, wherein the second indication information indicates a feedback mode used for sending the second PPDU.

8. The method according to any one of claims 1 to 3, wherein the sensing measurement result feedback requirement comprises required duration from a moment at which the first device finishes receiving the first PPDU to a moment at which the first device starts to send the second PPDU in a same measurement instance.

9. A communication method, comprising:

receiving, by a first device, a target measurement configuration from a second device;

sending, by the first device, third indication information to the second device, wherein the third indication information indicates a sensing measurement result feedback requirement corresponding to the target measurement configuration, the sensing measurement result feedback requirement comprises required duration from a moment at which the first device finishes receiving a first physical layer protocol data unit PPDU to a moment at which the first device starts to send a second PPDU, the first PPDU is used by the first device to perform sensing measurement to obtain a sensing measurement result, and the second PPDU comprises the sensing measurement result; and

receiving, by the first device, the first PPDU from the second device.

10. The method according to claim 9, wherein before the receiving, by the first device, the first PPDU, the method further comprises:

receiving, by the first device, first indication information from the second device, wherein the first indication information indicates at least one of the following: a feedback mode used by the first device to send the second PPDU, whether the second device meets the sensing measurement result feedback requirement corresponding to the target measurement configuration, and duration that is capable of being ensured by the second device and that is from the moment at which the first device finishes receiving the first PPDU to a moment at which the first device starts to send a third PPDU, wherein the third PPDU is a PPDU sent by the first device to the second device in a first measurement instance, and the first measurement instance is a measurement instance in which the first device receives the first PPDU.

11. A communication method, comprising:

sending, by a first device, first information to a second device, wherein the first information is used to determine a sensing measurement result feedback requirement corresponding to a target measurement configuration, the first information indicates a sensing measurement result feedback requirement corresponding to each of N different measurement configurations, and N is a positive integer; the sensing measurement result feedback requirement comprises at least one of the following: required duration from a moment at which the first device finishes receiving a first physical layer protocol data unit PPDU to a moment at which the first device starts to send a second PPDU, or a feedback mode used by the first device to send the second PPDU; and the first PPDU is used by the first device to perform sensing measurement to obtain a sensing measurement result, the second PPDU comprises the sensing measurement result, and the feedback mode comprises an immediate feedback mode or a delayed feedback mode; and

receiving, by the first device, the first PPDU from the second device.

12. The method according to claim 11, wherein when the N different measurement configurations do not comprise the target measurement configuration, a sensing measurement result feedback requirement corresponding to a first measurement configuration in the N different measurement configurations is the sensing measurement result feedback requirement corresponding to the target measurement configuration, and the following relationship exists between the first measurement configuration and the target measurement configuration:

a value of a quantization bit value in the target measurement configuration is 8, a value of a quantization bit value in the first measurement configuration is 10, and a value of a remaining sensing measurement parameter in the first measurement configuration is the same as a value of a corresponding sensing measurement parameter in the target measurement configuration, wherein the quantization bit value is a quantization bit value of each real part or imaginary part corresponding to channel state information CSI; or

a difference between a sensing measurement parameter in the target measurement configuration and a corresponding sensing measurement parameter in the first measurement configuration is minimum.

13. The method according to claim 11 or 12, wherein before the receiving, by the first device, the first PPDU, the method further comprises:

receiving, by the first device, first indication information from the second device, wherein the first indication information indicates at least one of the following: the feedback mode used by the first device to send the second PPDU, whether the second device meets the sensing measurement result feedback requirement corresponding to the target measurement configuration, and duration that is capable of being ensured by the second device and that is from the moment at which the first device finishes receiving the first PPDU to a moment at which the first device starts to send a third PPDU, wherein the third PPDU is a PPDU sent by the first device to the second device in a first measurement instance, and the first measurement instance is a measurement instance in which the first device receives the first PPDU.

14. A communication method, comprising:

receiving, by a second device, first information from a first device, wherein the first information is used to determine a sensing measurement result feedback requirement corresponding to a target measurement configuration, the first information indicates a sensing measurement result feedback requirement corresponding to each of N different measurement configurations, and N is a positive integer; the sensing measurement result feedback requirement comprises at least one of the following: required duration from a moment at which the first device finishes receiving a first physical layer protocol data unit PPDU to a moment at which the first device starts to send a second PPDU, or a feedback mode used by the first device to send the second PPDU; and the first PPDU is used by the first device to perform sensing measurement to obtain a sensing measurement result, the second PPDU comprises the sensing measurement result, and the feedback mode comprises an immediate feedback mode or a delayed feedback mode; and

sending, by the second device, the first PPDU to the first device.

15. The method according to claim 14, wherein the method further comprises:

if the N different measurement configurations comprise the target measurement configuration, determining, by the second device based on the first information, the sensing measurement result feedback requirement corresponding to the target measurement configuration; or

if the N different measurement configurations do not comprise the target measurement configuration, determining, by the second device based on the first information, that a sensing measurement result feedback requirement corresponding to a first measurement configuration in the N different measurement configurations is the sensing measurement result feedback requirement corresponding to the target measurement configuration; or

if the N different measurement configurations do not comprise the target measurement configuration, determining, by the second device, that the sensing measurement result feedback requirement corresponding to the target measurement configuration is a preset feedback requirement, wherein

the following relationship exists between the first measurement configuration and the target measurement configuration:

a value of a quantization bit value in the target measurement configuration is 8, a value of a quantization bit value in the first measurement configuration is 10, and a value of a remaining sensing measurement parameter in the first measurement configuration is the same as a value of a corresponding sensing measurement parameter in the target measurement configuration, wherein the quantization bit value is a quantization bit value of each real part or imaginary part corresponding to channel state information CSI; or

a difference between a sensing measurement parameter comprised in the target measurement configuration and a corresponding sensing measurement parameter in the first measurement configuration is minimum.

16. The method according to claim 14 or 15, wherein before the sending, by the second device, the first PPDU, the method further comprises:

if the second device meets the sensing measurement result feedback requirement corresponding to the target measurement configuration, sending, by the second device, first indication information to the first device, wherein the first indication information indicates the first device to send the second PPDU in an immediate feedback mode, or indicates that the second device is capable of meeting the sensing measurement result feedback requirement corresponding to the target measurement configuration; or

if the second device does not meet the sensing measurement result feedback requirement corresponding to the target measurement configuration, sending, by the second device, first indication information to the first device, wherein the first indication information indicates the first device to send the second PPDU in a delayed feedback mode, or indicates that the second device is not capable of meeting the sensing measurement result feedback requirement corresponding to the target measurement configuration; or

sending, by the second device, first indication information to the first device, wherein the first indication information indicates duration that is capable of being ensured by the second device and that is from the moment at which the first device finishes receiving the first PPDU to a moment at which the first device starts to send a third PPDU, the third PPDU is a PPDU sent by the first device to the second device in a first measurement instance, and the first measurement instance is a measurement instance in which the first device receives the first PPDU.

17. The method according to claim 14 or 15, wherein each of the N different measurement configurations is determined based on one or more of the following: a value of a number of transmit antennas, a value of a number of receive antennas, a value of a subcarrier grouping size, a value of the quantization bit value of each real part or imaginary part corresponding to the CSI, and a value of a bandwidth.

18. The method according to claim 17, wherein the first information further indicates one or more of the following: t values of the number of transmit antennas, r values of the number of receive antennas, g values of the subcarrier grouping size, b values of the quantization bit value, and w values of the bandwidth, wherein t, r, g, b, and w are all positive integers.

19. The method according to claim 18, wherein the first information indicates the t values of the number of transmit antennas in the following manner:

the first information indicates a largest value in the t values; or
the first information indicates a smallest value in the t values; or
the first information comprises T bits, wherein the T bits one-to-one correspond to T possible values of the number of transmit antennas, each of the T bits indicates whether the t values comprise a value corresponding to the bit, and T is a positive integer.

20. The method according to claim 18 or 19, wherein the first information indicates the r values of the number of receive antennas in the following manner:

the first information indicates a largest value in the r values; or
the first information indicates a smallest value in the r values; or
the first information comprises R bits, wherein the R bits one-to-one correspond to R possible values of the number of receive antennas, each of the R bits indicates whether the r values comprise a value corresponding to the bit, and R is a positive integer.

21. The method according to any one of claims 18 to 20, wherein the first information indicates the g values of the subcarrier grouping size in the following manner:

the first information indicates a largest value in the g values; or
the first information indicates a smallest value in the g values; or
the first information comprises G bits, wherein the G bits one-to-one correspond to G possible values of the subcarrier grouping size, each of the G bits indicates whether the g values comprise a value corresponding to the bit, and G is a positive integer.

22. The method according to any one of claims 18 to 21, wherein the first information indicates the b values of the quantization bit value in the following manner:

the first information indicates a largest value in the b values; or
the first information indicates a smallest value in the b values; or
the first information comprises B bits, wherein the B bits one-to-one correspond to B possible values of the number of receive antennas, each of the B bits indicates whether the b values comprise a value corresponding to the bit, and B is a positive integer.

23. The method according to any one of claims 18 to 22, wherein the first information indicates the w values of the bandwidth in the following manner:

the first information indicates a largest value in the w values; or
the first information indicates a smallest value in the w values; or
the first information comprises W bits, wherein the W bits one-to-one correspond to W possible values of the bandwidth, each of the W bits indicates whether the w values comprise a value corresponding to the bit, and W is a positive integer.

24. The method according to any one of claims 11 to 23, wherein the second PPDU further comprises one or more of the following: second indication information, an identifier of sensing measurement setup corresponding to the sensing measurement result, and an identifier of a sensing measurement instance corresponding to the sensing measurement result, wherein the second indication information indicates the feedback mode used for sending the second PPDU.

25. The method according to any one of claims 11 to 24, wherein the sensing measurement result feedback requirement comprises required duration from a moment at which the first device finishes receiving the first PPDU to a moment at which the first device starts to send the second PPDU in a same measurement instance.

26. An apparatus, comprising a transceiver unit, wherein

the transceiver unit is configured to send first information to a second device, wherein the first information is used to determine a sensing measurement result feedback requirement corresponding to a target measurement configuration, the first information indicates a sensing measurement result feedback requirement corresponding to each of N different measurement configurations, and N is a positive integer; the sensing measurement result feedback requirement comprises at least one of the following: required duration from a moment at which a first device receives a first physical layer protocol data unit PPDU to a moment at which the first device starts to send a second PPDU, or a feedback mode used by the first device to send the second PPDU; and the first PPDU is used by the first device to perform sensing measurement to obtain a sensing measurement result, the second PPDU comprises the sensing measurement result, and the feedback mode comprises an immediate feedback mode or a delayed feedback mode; and
the transceiver unit is further configured to receive the first PPDU from the second device.

27. An apparatus, comprising a transceiver unit, wherein

the transceiver unit is configured to receive first information from a first device, wherein the first information is used to determine a sensing measurement result feedback requirement corresponding to a target measurement configuration, the first information indicates a sensing measurement result feedback requirement corresponding to each of N different measurement configurations, and N is a positive integer; the sensing measurement result feedback requirement comprises at least one of the following: required duration from a moment at which the first device finishes receiving a first physical layer protocol data unit PPDU to a moment at which the first device starts to send a second PPDU, or a feedback mode used by the first device to send the second PPDU; and the first PPDU is used by the first device to perform sensing measurement to obtain a sensing measurement result, the second PPDU comprises the sensing measurement result, and the feedback mode comprises an immediate feedback mode or a delayed feedback mode; and
the transceiver unit is further configured to send the first PPDU to the first device.

28. An apparatus, comprising a transceiver unit, wherein

the transceiver unit is configured to receive a target measurement configuration from a second device;
the transceiver unit is further configured to send third indication information to the second device, wherein the third indication information indicates a sensing measurement result feedback requirement corresponding to the target measurement configuration, the sensing measurement result feedback requirement comprises required duration from a moment at which a first device finishes receiving a first physical layer protocol data unit PPDU to a moment at which the first device starts to send a second PPDU, the first PPDU is used by the first device to perform sensing measurement to obtain a sensing measurement result, and the second PPDU comprises the sensing measurement result; and
the transceiver unit is further configured to receive the first PPDU from the second device.

29. An apparatus, comprising a transceiver unit, wherein

the transceiver unit is configured to send a target measurement configuration to a first device;
the transceiver unit is further configured to receive third indication information from the first device, wherein the third indication information indicates a sensing measurement result feedback requirement corresponding to the target measurement configuration, the sensing measurement result feedback requirement comprises required duration from a moment at which the first device finishes receiving a first physical layer protocol data unit PPDU to a moment at which the first device starts to send a second PPDU, the first PPDU is used by the first device to perform sensing measurement to obtain a sensing measurement result, and the second PPDU comprises the sensing measurement result; and
the transceiver unit is further configured to send the first PPDU to the first device.

30. An apparatus, comprising:
a processor, configured to execute computer instructions stored in a memory, to enable the apparatus to perform the method according to any one of claims 1 to 10, or to enable the apparatus to perform the method according to any one of claims 11 to 25.

31. A computer-readable storage medium, configured to store a computer program, wherein the computer program comprises instructions for implementing the method according to any one of claims 1 to 10, or comprises instructions for implementing the method according to any one of claims 11 to 25.

FIG. 1

| | | | |
|---|---|---|---|
| AID=1 is included in measurement setup 1 | 1 | Sensing session setup | MAC address=A and AID=1 |
| | 2 | Measurement setup | Measurement setup ID=1 and MAC address=A |
| | 3 | Measurement instance: measurement and reporting | Measurement instance ID=1, measurement setup ID=1, and AID=1 |
| Measurement entity+1 | 4 | Measurement instance: measurement and reporting | Measurement instance ID=2, measurement setup ID=1, and AID=1 |
| AID=1 is included in measurement setup 2 | 5 | Measurement setup | Measurement setup ID=2 and MAC address=A |
| | 6 | Measurement instance: measurement and reporting | Measurement instance ID=1, measurement setup ID=2, and AID=1 |
| | ⋮ | | |
| UID=2 is included in the measurement setup 2 | 7 | Sensing session setup | MAC address=B and UID=2 |
| | 8 | Measurement setup | Measurement setup ID=2 and MAC address=B |
| | 9 | Measurement instance: measurement and reporting | Measurement instance ID=2, measurement setup ID=2, AID=1, and UID=2 |
| Delete AID=1 from the measurement setup 2 | ⋮ | | |
| | 10 | Measurement setup termination | Measurement setup ID=2 and MAC address=A |
| UID=2 is included in the measurement setup 1 | 11 | Measurement setup | Measurement setup ID=1 and MAC address=B |
| | 12 | Measurement instance: measurement and reporting | Measurement instance ID=3, measurement setup ID=1, AID=1, and UID=2 |
| | ⋮ | | |
| AID=1 sensing termination | 13 | Sensing session termination | MAC address=A and AID=1 |
| AID=3 is included in the measurement setup 2 | 14 | Sensing session setup | MAC address=C and AID=3 |
| | 15 | Measurement setup | Measurement setup ID=2 and MAC address=C |
| | 16 | Measurement instance: measurement and reporting | Measurement instance ID=3, measurement setup ID=2, AID=3, and UID=2 |

T

FIG. 2

| Sensing session setup | Measurement setup | Measurement setup termination | Sensing session termination |
|---|---|---|---|

FIG. 3

(a)

| Polling |
|---|
| NDPA sounding |
| Reporting |

T

TB sensing
measurement instance
(example 1)

(b)

| Polling |
|---|
| TF sounding |
| Reporting |

T

TB sensing
measurement instance
(example 2)

(c)

| Polling |
|---|
| NDPA sounding |
| TF sounding |
| Reporting |

T

TB sensing
measurement instance
(example 3)

(d)

| Polling |
|---|
| TF sounding |
| NDPA sounding |
| Reporting |

T

TB sensing
measurement instance
(example 4)

(e)

| Polling |
|---|
| NDPA sounding |
| TF sounding |

(Example 5)
TB sensing measurement
instance 1

| Polling |
|---|
| Reporting |

(Example 5)
TB sensing measurement
instance 2

T

FIG. 4

| Measurement instance 1 Measurement setup 1 | Measurement instance 2 Measurement setup 1 | Measurement instance 3 Measurement setup 1 | Measurement instance 4 Measurement setup 1 |
|---|---|---|---|

Immediate feedback     Immediate feedback     Immediate feedback     Immediate feedback

T

(a)

| Measurement instance 1 Measurement setup 1 | Measurement instance 2 Measurement setup 1 | Measurement instance 3 Measurement setup 1 | Measurement instance 4 Measurement setup 1 |
|---|---|---|---|

Delayed feedback     Delayed feedback     Delayed feedback

T

(b)

FIG. 5

600

```
┌─────────────┐                                    ┌──────────────┐
│ First device│                                    │ Second device│
└─────────────┘                                    └──────────────┘
```

S610: First information, where the first information is used to determine a sensing measurement result feedback requirement corresponding to a target measurement configuration

S620: First indication information

S630: Fourth indication information

S640: First PPDU

FIG. 6

Measurement instance

NDPA sounding phase ⟵ ⟶  Reporting phase

Second device | NDPA | NDP | Trigger frame

...

First device | First PPDU | Third PPDU

Actual duration

Target required duration

(a)

Measurement instance

NDPA sounding phase ⟵ ⟶  Reporting phase

Second device | NDPA | NDP | Trigger frame

...

First device | First PPDU | Third PPDU

Actual duration

Target required duration

(b)

FIG. 7

| Measurement configuration #1 | Sensing measurement result feedback requirement corresponding to the measurement configuration #1 | Measurement configuration #2 | Sensing measurement result feedback requirement corresponding to the measurement configuration #2 | ... | Measurement configuration #N | Sensing measurement result feedback requirement corresponding to the measurement configuration #N |
|---|---|---|---|---|---|---|
| $\lceil \log_2 N \rceil$ bits | 3 bits | $\lceil \log_2 N \rceil$ bits | 3 bits | | $\lceil \log_2 N \rceil$ bits | 3 bits |

(a)

| Sensing measurement result feedback requirement #1 | $N_1$ measurement configurations corresponding to the sensing measurement result feedback requirement #1 | Sensing measurement result feedback requirement #2 | $N_2$ measurement configurations corresponding to the sensing measurement result feedback requirement #2 | ... | Sensing measurement result feedback requirement #M | $N_M$ measurement configurations corresponding to the sensing measurement result feedback requirement #N |
|---|---|---|---|---|---|---|
| 3 bits | $N_1 \times \lceil \log_2 N \rceil$ bits | 3 bits | $N_2 \times \lceil \log_2 N \rceil$ bits | | 3 bits | $N_M \times \lceil \log_2 N \rceil$ bits |

(b)

FIG. 8

EP 4 572 174 A1

| BW bitmap | $N_{TX}$ bitmap | $N_{RX}$ bitmap | $N_g16$ supported | Accurate $N_b$ | $N_g$=4 or 8 (1) | $N_g$=16 (1) | $N_g$=4 or 8 (2) | $N_g$=16 (2) | ... | Padding |
|---|---|---|---|---|---|---|---|---|---|---|
| 5 bits | 8 bits | 8 bits | 1 bit | 1 bit | 3 bits | 3 bits | 3 bits | 3 bits | | 0 bits to 7 bits |

(a)

| BW end | $N_{TX}$ end | $N_{RX}$ end | $N_g16$ supported | Accurate $N_b$ | $N_g$=4 or 8 (1) | $N_g$=16 (1) | $N_g$=4 or 8 (2) | $N_g$=16 (2) | ... | Padding |
|---|---|---|---|---|---|---|---|---|---|---|
| 3 bits | 3 bits | 3 bits | 1 bit | 1 bit | 3 bits | 3 bits | 3 bits | 3 bits | | 0 bits to 7 bits |

(b)

FIG. 9

1000

```
First device                                    Second device
     │                                                │
     │     S1010: Target measurement configuration    │
     │◄───────────────────────────────────────────────│
     │                                                │
     │  S1020: Third indication information, where the third │
     │  indication information indicates a sensing measurement│
     │  result feedback requirement corresponding to the target│
     │            measurement configuration           │
     │───────────────────────────────────────────────►│
     │                                                │
     │        S1030: First indication information      │
     │◄ ─ ─ ─ ─ ─ ─ ─ ─ ─ ─ ─ ─ ─ ─ ─ ─ ─ ─ ─ ─ ─ ─ ─ │
     │                                                │
     │        S1040: Fourth indication information     │
     │─ ─ ─ ─ ─ ─ ─ ─ ─ ─ ─ ─ ─ ─ ─ ─ ─ ─ ─ ─ ─ ─ ─ ─►│
     │                                                │
     │              S1050: First PPDU                  │
     │◄───────────────────────────────────────────────│
     │                                                │
```

FIG. 10

1100

```
┌─────────────────────────────────────────────┐
│                                             │
│     ┌─────────────────────────────────┐     │
│     │                                 │     │
│     │      Transceiver unit 1110      │     │
│     │                                 │     │
│     └─────────────────────────────────┘     │
│                     │                       │
│     ┌─────────────────────────────────┐     │
│     │                                 │     │
│     │      Processing unit 1120       │     │
│     │                                 │     │
│     └─────────────────────────────────┘     │
│                                             │
└─────────────────────────────────────────────┘
```

FIG. 11

1200

```
┌─────────────────────────────────────────────────────┐
│                                                       │
│   ┌──────────────────────┐      ┌ ─ ─ ─ ─ ─ ─ ─ ─ ┐  │
│   │                      │                           │
│   │   Processor 1210     │──────  Transceiver 1230   │
│   │                      │                           │
│   └───────────┬──────────┘      └ ─ ─ ─ ─ ─ ─ ─ ─ ┘  │
│               │                                       │
│   ┌ ─ ─ ─ ─ ─ ┴ ─ ─ ─ ─ ┐                            │
│                                                       │
│       Memory 1220                                     │
│                                                       │
│   └ ─ ─ ─ ─ ─ ─ ─ ─ ─ ─ ┘                            │
│                                                       │
└─────────────────────────────────────────────────────┘
```

FIG. 12

```
┌─────────────────────────────────────────┐
│            Chip system 1300              │
│                                          │
│   ┌──────────────────────────────────┐   │
│   │                                  │   │
│   │        Logic circuit 1310        │   │
│   │                                  │   │
│   └─────────────────┬────────────────┘   │
│                     │                    │
│   ┌─────────────────┴────────────────┐   │
│   │                                  │   │
│   │   Input/Output interface 1320    │   │
│   │                                  │   │
│   └──────────────────────────────────┘   │
│                                          │
└─────────────────────────────────────────┘
```

FIG. 13

## INTERNATIONAL SEARCH REPORT

| International application No. |
| --- |
| **PCT/CN2023/118184** |

| A. | CLASSIFICATION OF SUBJECT MATTER |
| --- | --- |
| | H04B 7/06(2006.01)i |

According to International Patent Classification (IPC) or to both national classification and IPC

| B. | FIELDS SEARCHED |
| --- | --- |

Minimum documentation searched (classification system followed by classification symbols)

    IPC: H04B, H04L, G01S, H04W

Documentation searched other than minimum documentation to the extent that such documents are included in the fields searched

Electronic data base consulted during the international search (name of data base and, where practicable, search terms used)

    CNTXT, ENTXT, DWPI, CNKI: 感知, 感测, 测量, 需要, 所需, 需求, 时间, 时长, 反馈, sense, measure, need, required, time, feedback

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 112350809 A (HUAWEI TECHNOLOGIES CO., LTD.) 09 February 2021 (2021-02-09) description, paragraphs 84-97, 103, and 261-264 | 1-31 |
| Y | CN 112218328 A (HUAWEI TECHNOLOGIES CO., LTD.) 12 January 2021 (2021-01-12) description, paragraphs 3-11 | 1-31 |
| A | CN 114828075 A (CHENGDU XGIMI TECHNOLOGY CO., LTD.) 29 July 2022 (2022-07-29) entire document | 1-31 |
| A | WO 2022166662 A1 (HUAWEI TECHNOLOGIES CO., LTD.) 11 August 2022 (2022-08-11) entire document | 1-31 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **11 October 2023** | **17 October 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/118184**

| Patent document cited in search report | | | Publication date (day/month/year) | Patent family member(s) | | | Publication date (day/month/year) |
|---|---|---|---|---|---|---|---|
| CN | 112350809 | A | 09 February 2021 | WO | 2021023093 | A1 | 11 February 2021 |
|    |           |   |                  | US | 2022159426 | A1 | 19 May 2022 |
| CN | 112218328 | A | 12 January 2021 | WO | 2021004378 | A1 | 14 January 2021 |
|    |           |   |                  | EP | 3986018 | A1 | 20 April 2022 |
| CN | 114828075 | A | 29 July 2022 | None | | | |
| WO | 2022166662 | A1 | 11 August 2022 | CN | 114915326 | A | 16 August 2022 |

Form PCT/ISA/210 (patent family annex) (July 2022)

**REFERENCES CITED IN THE DESCRIPTION**

**Patent documents cited in the description**

• CN 202211116678